(19) Europäisches Patentamt
European Patent Office
Office européen des brevets

(11) **EP 1 056 632 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **99968316.2**

(22) Anmeldetag: **18.12.1999**

(51) Int Cl.:
*B60T 8/40* (2006.01)     *B60T 13/66* (2006.01)
*B60T 8/42* (2006.01)

(86) Internationale Anmeldenummer:
**PCT/DE1999/004043**

(87) Internationale Veröffentlichungsnummer:
**WO 2000/038966 (06.07.2000 Gazette 2000/27)**

(54) **VERFAHREN UND VORRICHTUNG ZUR DRUCKERMITTLUNG IN BREMSSYSTEMEN**

METHOD AND DEVICE FOR DETERMINING THE PRESSURE IN BRAKE SYSTEMS

PROCEDE ET DISPOSITIF POUR DETECTER LA PRESSION DANS DES SYSTEMES DE FREINAGE

(84) Benannte Vertragsstaaten:
**DE FR GB**

(30) Priorität: **28.12.1998 DE 19860365**

(43) Veröffentlichungstag der Anmeldung:
**06.12.2000 Patentblatt 2000/49**

(73) Patentinhaber: **ROBERT BOSCH GMBH**
**70442 Stuttgart (DE)**

(72) Erfinder:
• **LOHNER, Herbert**
  **D-71292 Friolzheim (DE)**
• **DOMINKE, Peter**
  **D-74321 Bietigheim-Bissingen (DE)**
• **CAO, Chi-Thuan**
  **D-70825 Korntal-Muenchingen (DE)**
• **WEISS, Karl-Josef**
  **D-70374 Stuttgart (DE)**
• **WISS, Helmut**
  **D-71696 Moeglingen (DE)**
• **ZIERHUT, Andreas**
  **D-74182 Obersulm (DE)**
• **FIEDLER, Jens**
  **D-71665 Vaihingen-Riet (DE)**

(56) Entgegenhaltungen:
DE-A- 3 916 672          DE-A- 4 340 921
DE-A- 19 528 697        DE-A- 19 609 869
DE-A- 19 632 311        DE-A- 19 836 686

**Beschreibung**

Stand der Technik

Die Erfindung betrifft Verfahren und Vorrichtung zur Ermittlung von Druckgrößen, insbesondere eines -Radbremsdrukkes und/oder eines Vordrucks in einer Bremsanlage eines Fahrzeugs mit Antiblockiersystem (ABS) und/oder Antriebsschlupfregelung (ASR) und/oder Fahrdynamikregelung (FDR, ESP), gemäß den Oberbegriffen der unabhängigen Patentansprüche.

Aus der DE 40 30 724 A1 ist ein Bremsdruckregelsystem bekannt, bei dem aufgrund von Meß- und Schätzwerten Sollbremsdrücke für die Radbremszylinder ermittelt werden. Aus den Sollbremsdrücken werden mittels eines inversen Hydraulikmodells Ansteuerzeiten für eine Hydraulik mit Einlaßventilen ermittelt. Der Ist-Bremsdruck im Radbremszylinder wird dabei aus dem Bremskreisdruck, der dabei angenommenerweise dem mittels eines Sensors gemessenen Vordruck der Bremsanlage entspricht und den Ansteuerzeiten der den einzelnen Bremsen zugeordneten Ventilen mittels eines Hydraulikmodells abgeschätzt. Dabei ist weiterhin die Verwendung von Drucksensorik, insbesondere eines Vordrucksensors in der Bremsanlage notwendig.

Die DE 43 40 921 A1 zeigt daran anschließend eine konkrete Ausgestaltung in Form einer speziellen mathematischen Beziehung zur Abschätzung des Bremskreisdruckes für jeden Bremskreis. Dabei werden, insbesondere durch eine Vorladepumpe, in den einzelnen Bremskreisen höhere als vom Fahrer erzeugbare Bremskreisdrücke erzielt. Die konkrete zur Ermittlung des Soll-Bremsdruckes verwendete Modellrechnung benutzt ihrerseits notwendigerweise die geschätzten Bremskreisdrücke und den wiederum mittels eines Sensors gemessenen Vordruck. Es werden zwar weitere Sensoren für die Druckmessung eingespart, dennoch muß bei diesem Verfahren der Vordruck als Meßgröße vorliegen.

Ein Verfahren und eine Vorrichtung, um Sensoren zur Erfassung einer Druckgröße zu ersetzen ist in der DE 195 28 697 A1 beschrieben. Dabei wird ein Differenzdruck in einer Bremsanlage mit Antiblockiersystem oder Antriebsschlupfregelung mit einer Förderpumpe zwischen einem ersten Druck in einer ersten Leitung und einem zweiten Druck in einer zweiten Leitung erfaßt. Ausgegangen wird dabei von einer Größe, die als Maß für die Drehzahl der Förderpumpe dient. Einsatz findet dabei eine generatorisch im Nachlauf der Förderpumpe induzierte Spannung. Somit ist die Abhängigkeit von der generatorisch induzierten Spannung nur vorhanden, wenn mittels der Pumpe das zugehörige Druckmedium gefördert wird, andernfalls wird keine Ermittlung oder Vorgabe der Druckgröße durchgeführt. Daneben ist die ermittelte Größe als Maß für die Drehzahl insbesondere die generatorisch induzierten Motorspannung. Dadurch ist die daraus gewonnene Drehzahl stark spannungs- und temperaturabhängig. Diese Abhängigkeiten werden nicht berücksichtigt bzw. kompensiert. Ebenso darf dabei der Einfluß der Fertigungsstreuung bei der drehzahlbildenden Größe nicht vernachlässigt werden. Außerdem kann bei diesem Verfahren lediglich bei der Ermittlung eines Differenzdruckes zwischen einer ersten Leitung und einer zweiten Leitung auf Drucksensoren verzichtet werden. Zur Bestimmung eines Absolutdruckes muß wiederum eine Druckgröße als Referenz durch einen Sensor erfaßt werden.

Aus der Schrift DE 198 36 686 A1 ist ein Verfahren bzw. eine Vorrichtung zur Einstellung eines Bremsdrucks einer Radbremse bekannt. Dabei wird der Ist-Druck für die jeweilige Radbremse mittels eines Druckmodells aus geeigneten Eingangsgrößen berechnet und der Druckgradient in der Bremsenregelung u.a. in Abhängigkeit von dem Überschreiten eines Schwellenwertes des Ist-Drucks heraufgesetzt.

Aus der Schrift DE 196 09 869 A1 ist ein Bremskraft-Regelungssystem für ein Kraftfahrzeug bekannt, bei dem ein tatsächlich wirkender, geschätzter bzw. berechneter Bremshydraulikdruck mittels eines Modells für den hydraulischen Druck berechnet wird. Aus dem geschätzten Bremshydraulikdruck und einem Zielbremshydraulikdruck wird mittels eines Modells für den hydraulischen Druck eine Variable für die Steuereinrichtung des Regelungssystems berechnet.

Die Schrift DE 196 32 311 A1 zeigt ein Verfahren zur adaptiven Steuerung der Hydraulikpumpe einer Bremsanlage, die Niederdruckspeicher enthält, die das im Regelfall aus den Radbremsen abgeleitete Druckmittel aufnehmen und die durch die Hydraulikpumpe entleert werden. Zur Wiedergabe des Füllstands der Niederdruckspeicher wird ein Volumenmodell auf Basis eines Raddruckmodells gebildet, welches den radindividuellen Bremsdruckverlauf ermittelt. Bei der Bildung des Volumenmodells wird der durch die Hydraulikpumpe erzielte Abfluß an Druckmittel aus den Niederdruckspeichern berücksichtigt.

Aus der Schrift DE 195 28 697 A1 ist ein Verfahren zur Ermittlung einer Druckgröße in einem System, insbesondere eine Bremsanlage, mit einer Förderpumpe bekannt, bei der die Druckdifferenz zwischen einem ersten Druck in einer ersten Leitung und einem zweiten Druck in einer mit der ersten Leitung verbundenen zweiten Leitung ausgehend von einer Größe, die ein Maß für die Drehzahl der Förderpumpe darstellt, ermittelt wird.

Der so ermittelte Differenzdruck entspricht bei der Annahme eines geringen Drucks in der zweiten Leitung dem Vordruck PV der Bremsanlage.

In der DE 43 40 921 A1 wird ein Bremsdruckregelsystem beschrieben, bei dem Sollbremsdrücke ermittelt werden. Die zur Sollbremsdruckermittlung benötigten Bremsdrücke werden unter Verwendung einer Modellrechnung und des gemessenen Vordrucks ermittelt.

Aufgaben und Vorteile der Erfindung

Daraus ergibt sich die Aufgabe eine Druckgröße in einer Bremsanlage, insbesondere einen Vordruck und/oder einen Radbremsdruck, absolut, ohne den Einsatz von Drucksensorik zu ermitteln. Dabei kann auf in den jeweiligen Regelungen, wie z.B. einem Antiblockiersystem (ABS), einer Antriebsschlupfregelung (ASR), einer. Fahrdynamikregelung (FDR, ESP),einer Bremskraftverstärkung (HBV, HBU), Fahrgeschwindigkeitsregelung (ACC), einer Steigungsregelung (Hill Holder Control HHC, Hill Descent Control HDC, etc.) ohnehin zur Verfügung stehende Größen zurückgegriffen werden ohne Druckgrößen explizit erfassen zu müssen. Somit sind die Verfahren und die jeweils entsprechende Vorrichtung für alle die Bremswirkung beeinflussenden Systeme bzw. Regelungen zur Erhöhung der Fahrstabilität und/oder Sicherheit bei Fahrzeugen einsetzbar.

Durch den Einsatz erfindungsgemäßer Verfahren kann, insbesondere in der erfindungsgemäßen Vorrichtung, der Einsatz von Drucksensoren eingespart werden. Insbesondere auf die im genannten Stand der Technik verwendeten Vordrucksensorik kann verzichtet werden. Dabei können benötigte Größen, wie z.B. bei der Radbremsdruck- bzw. Raddruckschätzung der Startwert und der Vordruck, mit vorhandenen Signalen wie z.B. Radgeschwindigkeit, Drehzahl oder Spannung bzw. Stromaufnahme des Pumpenmotors, ermittelt werden.

Die Idee der Druckschätzung, insbesondere Ermittlung des Vordrucks, liegt darin, daß das erforderliche Moment des Pumpenmotors bei Rückförderung direkt proportional zum Vordruck ist. Der Nachteil einer drehzahlabhängigen Druckerfassung wird durch die Verwendung der Stromaufnahme als Meßgröße kompensiert. Dies ist möglich, da die Stromaufnahme des Pumpenmotors abhängig vom zugehörigen Moment ist. Somit nimmt die Stromaufnahme des Pumpenmotors linear mit dem Moment zu. Das, was eine drehzahlabhängige Größe die beispielsweise die generatorisch induzierte Nachlaufspannung steht das Stromsignal ständig zur Auswertung zur Verfügung und nicht nur wenn die Pumpe in Betrieb ist.

Die Spannungs- und/oder Temperaturabhängigkeit einer als Maß für die Drehzahl verwendeten Größe kann durch Verwendung von Strömen, insbesondere wenigstens eines Motorstromes, vermieden bzw. kompensiert werden. Ebenso spielt dann dabei der Einfluß der Fertigungsstreuung eine geringere Rolle als bei der drehzahlbildenden Größe, wie der generatorisch induzierten Motorspannung bzw. Nachlaufspannung.

Weiterhin von Vorteil ist die Einbringung eines druckabhängigen Faktors in eine Beziehung zwischen Abbauzeit und dem Volumen des betrachteten Druckmediums, insbesondere in einem Druckspeicher, zur Druckschätzung, da damit der Abhängigkeit dieser Beziehung bzw. dieses Zusammenhangs vom Druckniveau und damit der weiteren Erhöhung der Güte und Sicherheit der Verfahren bzw. Vorrichtung Rechnung getragen wird.

Vorteilhafterweise wird der Einfluß der Temperatur auf die Schätzgenauigkeit der jeweiligen, wenigstens einen Druckgröße, insbesondere des Vordrucks, erfindungsgemäß dadurch kompensiert, daß die Temperaturinformation beispielsweise in einen Proportionalfaktor zur Bestimmung der Druckgröße oder einen entsprechenden Mittelwert von Proportionalfaktoren eingebracht wird und diese dadurch variiert bzw. angepaßt werden.

Eine mögliche Temperaturabhängigkeit der Schätzung, insbesondere des in einem vorhergehenden Absatz genannten Zusammenhangs zwischen Abbauzeit und dem Volumen, wird durch Zugrundelegen einer Ähnlichkeit bzw. Vergleichbarkeit der Temperaturabhängigkeit eines Stromes und einer Viskosität des Druckmediums und deren Einbringung in die erfindungsgemäßen Verfahren bzw. Vorrichtung berücksichtigt. Eine angenommene und vorgegebene Abhängigkeit eines Stromes von einer Viskosität des Druckmediums erlaubt im Weiteren sogar vorteilhafterweise eine Temperatur- bzw. Schätzfehlerkompensation durch einmalige, konstante oder kontinuierliche, variable Einbringung dieses Stromes, beispielsweise durch Minimumbildung im Stromverlauf, in die Verfahren bzw. jeweilige Vorrichtung.

Ebenso von Vorteil ist die Tatsache, daß durch die erfindungsgemäßen Verfahren und die jeweils entsprechende Vorrichtung eine Plausibilitätsprüfung der ermittelten Druckgröße bzw. Druckgrößen durchführbar ist, wodurch einerseits eine sehr hohe Güte der Schätzung bzw. Ermittlung der Größe erzielt wird und andererseits eine Erhöhung der Sicherheit bei die Bremswirkung beeinflussenden Systemen bzw. Regelungen durch die sich daraus ergebende Überwachungsfunktion für die Größe erreicht wird.

Diese Vorteile gelten ebenso für den Fall einer μ-Split-Bremsung, einer Beeinflussung der Bremswirkung also, bei der sich wenigstens eines der Räder auf einem Untergrund befindet, dessen Reibkoeffizient μ sich von den anderen unterscheidet. Dies führt zu einer weiteren Erhöhung der Sicherheit und Berechenbarkeit des Fahrzeugverhaltens.

Ebenfalls von großem Vorteil ist der Einsatz der Verfahren und/oder Teilen daraus, bereits im ersten Regelzyklus bei den die Bremswirkung beeinflussenden Systemen bzw. Regelungen. Dadurch ist sofort beim Start die volle Sicherheit der Erfindung gegeben. Dabei kann durch Vorgabe eines höheren als des tatsächlichen Reibkoeffizienten die Sicherheit sogar noch erhöht werden.

Zeichnung

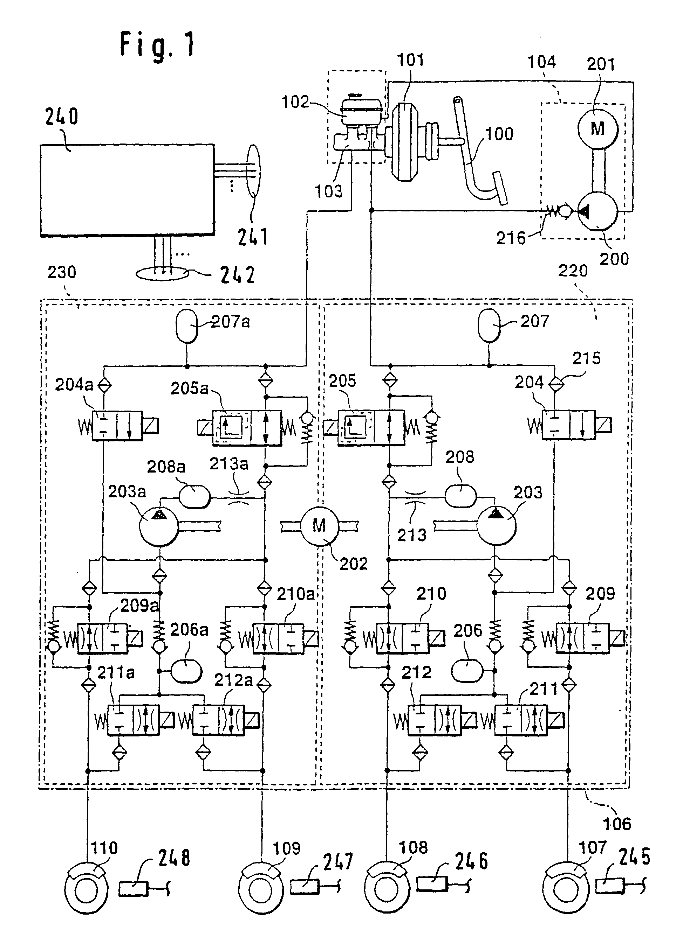

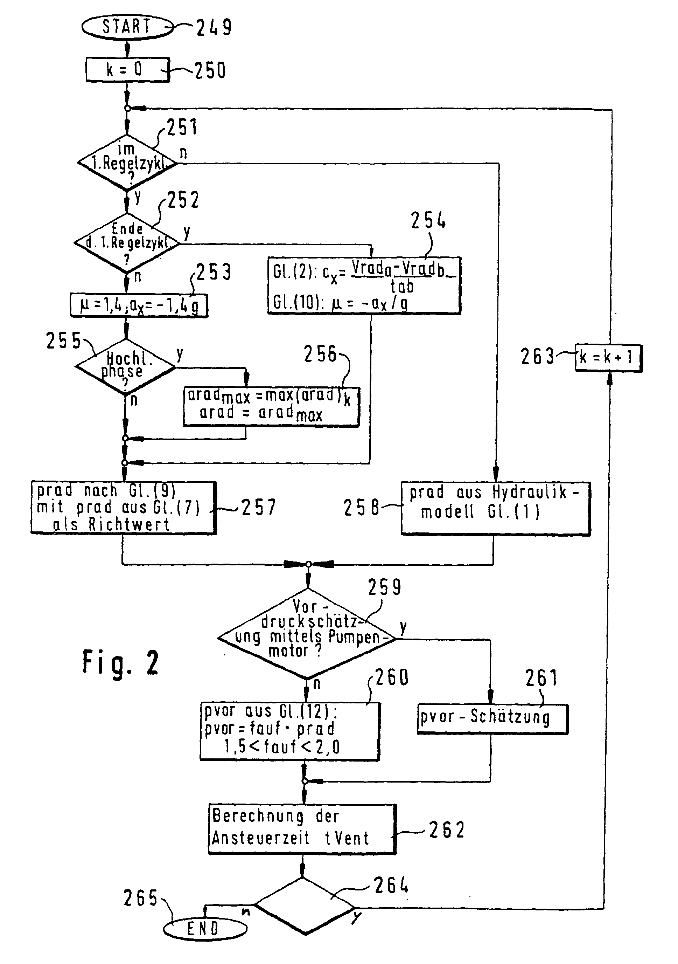

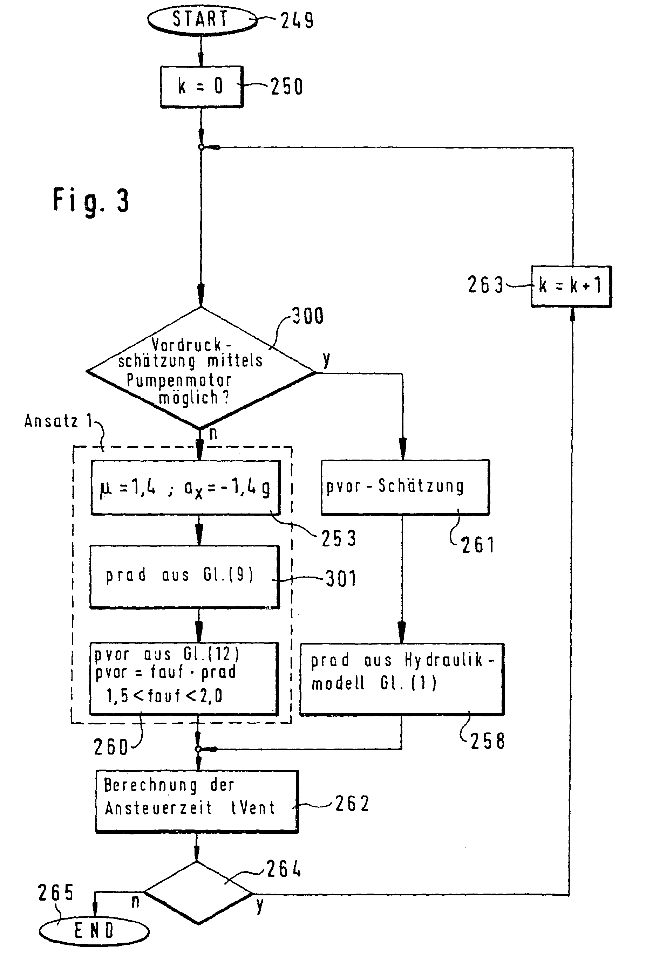

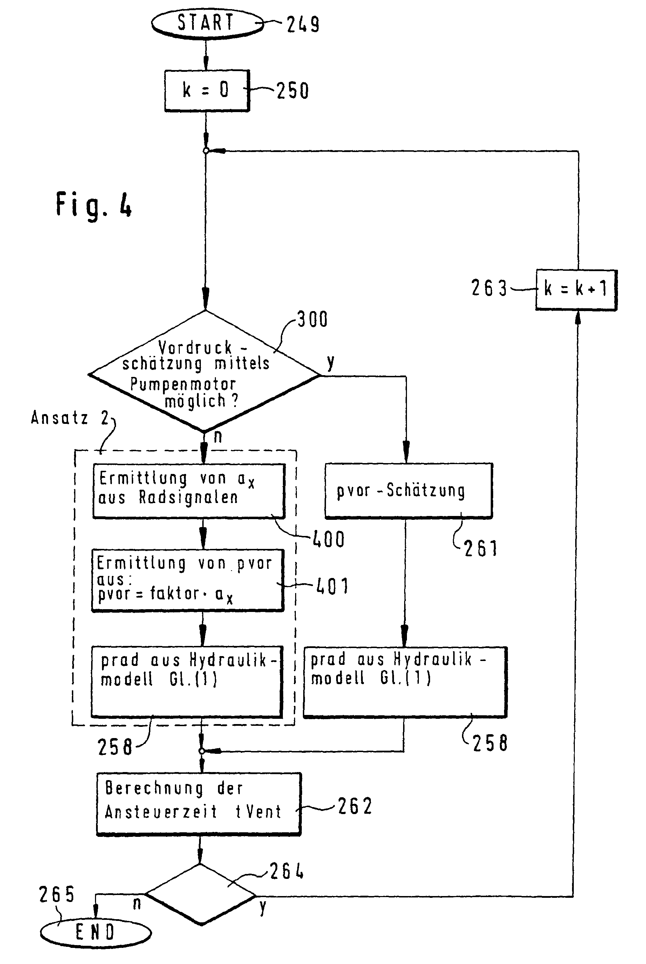

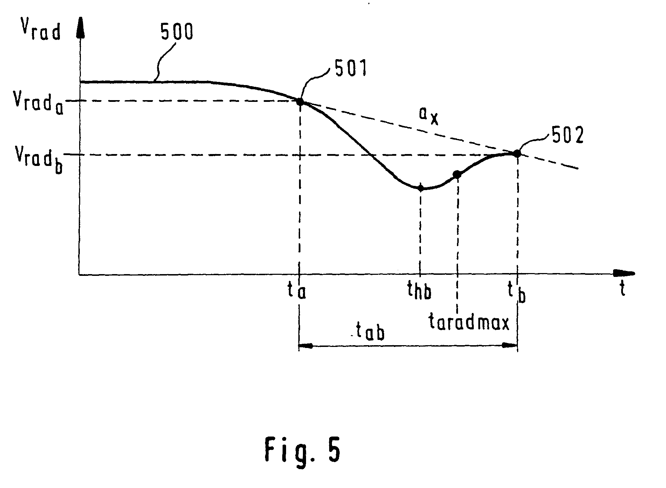

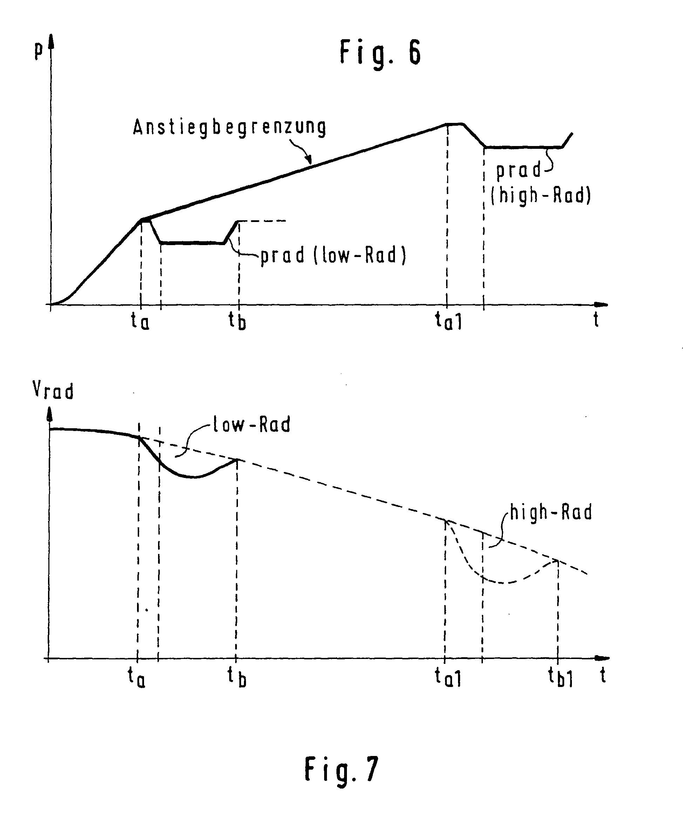

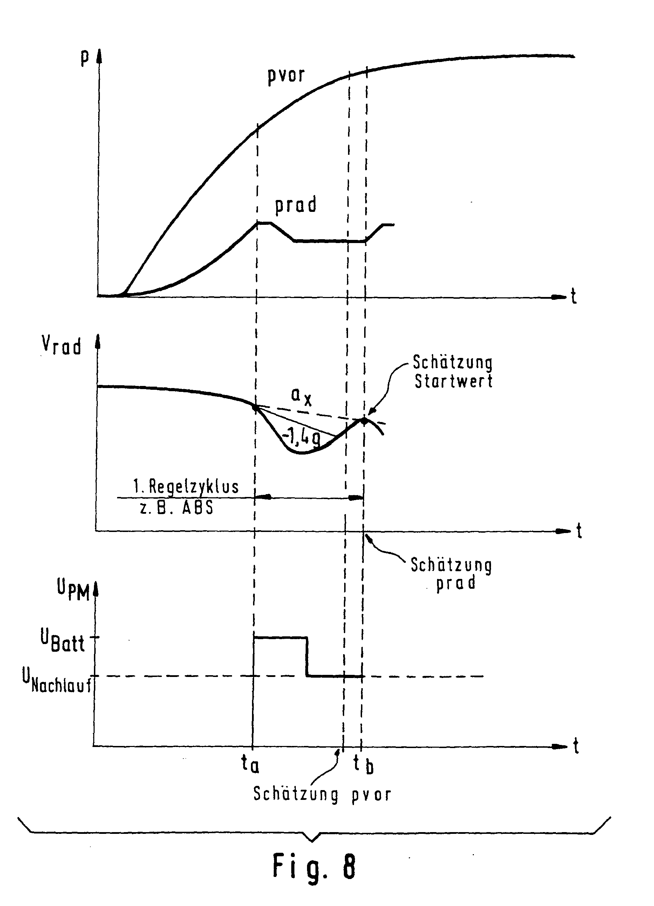

Die Erfindung wird nachstehend an Hand der in der Zeichnung dargestellten Ausführungsformen erläutert. Dabei zeigt Fig. 1 beispielhaft eine Bremsanlage mit Raddrehzahlsensoren und zugehöriger Steuereinheit, wie sie für die oben genannten Systeme zur Beeinflussung der Bremswirkung eingesetzt werden kann. Fig. 2 zeigt ein erstes Ausführungsbeispiel zur Druckschätzung, insbesondere zur Radbremsdruck- und/oder Vordruckschätzung in Form eines Flußdiagramms. Ein gegenüber Fig. 2 vereinfachtes Ausführungsbeispiel zur Druckschätzung ist in Fig. 3, ebenfalls in Form eines Ablaufdiagramms dargestellt. Fig. 4 zeigt ein weiteres Ausführungsbeispiel zur Druckschätzung, wiederum in vereinfachter Form gegenüber des Beispiels in Fig. 2. Bezüglich der dargestellten Ausführungsbeispiele zeigt Fig. 5 eine Möglichkeit der Ermittlung der Fahrzeugverzögerung im ersten Regelzyklus. In Fig. 6 ist dazu eine Möglichkeit dargestellt die maximale Radbeschleunigung während des Radhochlaufs zu ermitteln. Fig. 7 offenbart die Begrenzung eines Momentenanstiegs im Falle einer μ-Split-Bremsung. In Fig. 8 ist eine schematische Darstellung in Zeitdiagrammen des Ablaufs der Schätzung wiedergegeben.

Eine Übersichtsdarstellung eines konkreten Beispiels zur Druckschätzung, insbesondere zur Vordruckschätzung ist in Fig. 9 dargestellt. Fig. 10 zeigt dazu eine schematisierte Darstellung eines Volumenmodells. In Fig. 11 ist eine Bremskreis- und Druckabhängigkeit des Volumens des Druckmediums, insbesondere u.a. in einem Druckspeicher offenbart. Eine in den Ausführungsbeispielen einsetzbare Möglichkeit zur Ermittlung des effektiven Stromanteils ist in Fig. 12 dargestellt. Eine Temperaturabhängigkeit der Druckschätzung, insbesondere der Vordruckschätzung, ist in Fig. 13 wiedergegeben. Fig. 14 zeigt den zur Druckschätzung, insbesondere Vordruckschätzung verwendeten Proportionalfaktor in Abhängigkeit von einer Druckgröße und Temperatur. In Fig. 15 schließlich ist ein Vergleich der Viskosität des Druckmediums mit der Aufnahme eines Stromes des das Druckmedium fördernden Mittels, insbesondere des Pumpenmotors, dargestellt.

Beschreibung der Ausführungsbeispiele

Die Ausführungsbeispiele werden an Hand der in Fig. 1 dargestellten hydraulischen Fahrzeugbremsanlage mit einer Steuereinheit 240 und Raddrehzahlsensoren 245 bis 248 dargestellt. Dieses Bremssystem ist hier beispielhaft gewählt. Die Erfindung ist dagegen bei einer Vielzahl von die Bremswirkung beeinflussenden Systemen und entsprechenden Bremsanlagen und Bremssystemen einsetzbar. Die Funktionalitäten bezüglich der die Bremswirkung beeinflussenden Systeme, inbesondere ABS, ASR, FDR, können einerseits in der Steuereinheit 240 integriert sein oder in einer weiteren Steuereinheit bzw. übergeordneten Logik eingebettet werden, wobei diese dann mit der Steuereinheit 240 kommuniziert.

Das Bremspedal 100 ist mittels einer Kolbenstange beispielsweise über einen Bremskraftverstärker 101 mit dem Hauptbremszylinder 103 verbunden. Mit dem hier zweikreisigen Hauptbremszylinder 103 steht ein Vorratsbehälter 102 in Verbindung. Über eine Leitung für das Druckmedium ist eine Ladepumpe 104 zwischengeschaltet. Die Ladeleitung der Ladepumpe 104 mündet in eine Hauptbremsleitung, die für einen ersten Bremskreis von einem Anschluß des Hauptbremszylinders ausgeht und in das Hydraulikaggregat 106 führt. Von einem weiteren Anschluß des Hauptbremszylinders 103 verläuft eine zweite Hauptbremsleitung für einen zweiten Bremskreis ebenfalls in das Hydroaggregat 106. Da die Ladepumpe 104 über ihre Ladeleitung nur an einen Bremskreis angeschlossen ist, ist für den Hauptbremszylinder 103 ein modifiziertes Zentralventil vorgesehen, wodurch auch der zweite Bremskreis mit dem durch die Ladepumpe 104 geförderten Druckmedium versorgt werden kann. Durch einen zwischen den Bremskreisen im Hauptbremszylinder befindlichen Trennkolben entfaltet der durch das Druckmedium und die Ladepumpe aufgebaute Ladedruck ebenfalls im zweiten Bremskreis Wirkung. Demgegenüber kann aber auch für jeden Bremskreis eine Ladepumpe vorgesehen sein, wodurch keine Veränderung des Zentralventils zum Durchgriff der jeweiligen Ladepumpe auf den jeweils anderen Bremskreis mehr vorgesehen ist. Das Hydroaggregat 106 ist über Leitungen zum Führen des Druckmediums mit den Radbremsen 107 bis 110 verbunden. Eine Angabe zur Position der jeweiligen Radbremse ist bewußt nicht getroffen, da für die erfindungsgemäßen Verfahren und Vorrichtung keine bestimmte Anordnung notwendig ist. Vielmehr können alle gebräuchlichen Bremskreisaufteilungen, parallel oder X sowie Einzelradbremsung, etc. eingesetzt werden. Die zur Vorrichtung gehörende Steuerung ist schematisch als Block 240 dargestellt. An diese Steuereinheit 240 sind u. a. zum einen die einzelnen Ventile im Hydroaggregat 106 und zum anderen die Motoren der einzelnen im Bremssystem verwendeten Pumpen angeschlossen. Über eine der Steuerleitungen aus Leitungsbündel 241 wird dabei von der Steuereinheit 240 die Ladepumpe bzw. deren Motor angesteuert. Ein Motor wenigstens einer Rückförderpumpe wird ebenfalls mittels einer Steuerleitung aus Leitungsbündel 241 bedient. Ebenfalls mit Hilfe des Leitungsbündels 241 können die Ventile der Bremskreise geschaltet werden. Auch die übrigen notwendigen, dem Fachmann bekannten Steuerleitungen und Verbindungen, die beispielsweise zur Ansteuerung der Ein- und Auslaußventile der einzelnen Radbremsen dienen sind in dem Leitungsbündel 241 zusammengefaßt und nicht explizit erwähnt. Die Leitungsbündel 241 und 242 sind beispielhaft mit jeweils drei Anschlüssen, einmal für die Eingangsseite (242) und einmal für die Ausgangsseite (241) der Steuereinheit 240 dargestellt. Die genaue Leitungs- und Anschlußzahl richtet sich aber nach der jeweiligen Ausgestaltung des Bremssystems. So kann die Steuereinheit 240 bei Abtrennung einer übergeordneten Logik für die Bremswirkung beeinflussende Systeme, wie ABS und/oder ASR und/oder FDR, von dieser Eingangsrößen über Leitungsbündel 242 erhalten und über Leitungsbündel 241 an diese Ausgangsgrößen abgeben. Zur Vereinfachung der Darstellung sind etwaige Schaltmittel zur Ansteuerung der Pumpe z.B. zur Abtrennung des Pumpenmotors von bzw. zur Verbindung des Pumpenmotors mit der Versorgungsspannung bzw. der übrigen Stellglieder ebenfalls in den Block der Steuerung 240 integriert und nicht explizit ausgestaltet.

Der Block 104 für die Ladepumpe enthält eine Pumpe 200 den zugehörigen Pumpenmotor 201 und ein Sicherheitsventil 216. Um größere Übersichtigkeit in der Darstellung zu erzielen sind alle Sicherheitsventile in Fig. 1 in Form des Rückschlagventils 216 ausgeführt. Dies ist aber erfindungsgemäß nicht zwingend notwendig und so können abhängig vom jeweiligen System unterschiedliche Ventile oder Ventilkombinationen im Zusammenhang mit dieser Sicherheitsfunktion verwendet werden. Das Hydroaggregat 106 ist getrennt in zwei Bremskreisen 220 und 230 dargestellt. Im folgenden wird nur ein Bremskreis 220 im Detail beschrieben. Die analogen Elemente im nicht explizit beschriebenen Bremskreis 230 sind mit identischen Zahlen und dem Zusatz 'a' versehen. Ebenso wie die Sicherheitsventile 216 sind die in der Zeichnung verwendeten Filter 215 nicht einzeln bezeichnet, sondern eben unter 215 zusammengefaßt. Die hier verwendete Anordnung der Filter ist ebenfalls nicht zwingend. Die Filter sind beliebig den Anfordernissen entsprechend setzbar.

Im zu beschreibenden Bremskreis 220 ist an der Hauptbremsleitung eine Speicherkammer 207 angebracht. Die Einleitung des Druckmediums in den Bremskreis erfolgt über ein Vorladeventil 204. Diese steuerbaren Wegeventile 204 und 204A sind beispielsweise als elektromagnetisch steuerbare 2/2-Wegeventile ausgebildet und zwischen dem Hauptbremszylinder 103 und der Rückförderpumpe 203 angebracht. Ausgangsseitig an die Rückförderpumpe 203 schließt sich die Dämpferkammer 208 an. In Richtung zum Hauptbremszylinder 103 sowie zu den jeweiligen Bremsdruckaufbauventilen, also den Einlaßventilen 209, 209A in die Radbremsen folgt die Drossel 213. Der Auslaß des Druckmediums aus dem Bremskreis wird über eine Kombination aus Umschaltventil und Druckbegrenzungsventil 205 gesteuert. Dieses Umschaltventil 205 ist mittels eines Rückschlagventils umgehbar, so daß dann, wenn auf automatischen Bremsbetrieb geschaltet ist, bei ausreichender Betätigung des Bremspedals 100, Druck aus dem Hauptbremszylinder 103 sich bis zu den Ventilanordnungen zur Bremsdruckmodulation 209 bis 212 fortpflanzen kann. Von diesen Bremsventilanordnungen wird 209 und 210 als Einlaßventil des jeweiligen Radbremszylinders und 211 und 212 jeweils als Auslaßventil bezeichnet. An der Druckleitung, die von den Auslaßventilen 211 und 212 zur Rückförderpumpe 203 führt, ist des weiteren ein Druckspeicher 206 angebracht. Die Rückförderpumpe 203 selbst wird über einen Motor 202 angetrieben.

Mit 245 bis 248 sind Raddrehzahlsensoren für die jeweiligen Fahrzeugräder bezeichnet. Diese stehen mit der Steuereinheit 240 in Verbindung. Die genannten Stellglieder wie die jeweiligen Pumpenmotoren 202 bzw. 201 und die genannten Ventile und Ventilanordnungen werden hier durch die Steuerung 240 angesteuert.

Das in Fig. 2 dargestellte Verfahren zur Druckschätzung und der damit möglichen Bestimmung der Ansteuerzeit von den in Fig. 1 dargestellten Stellgliedern kann in Form eines Programms in der Steuereinheit 240 aus Fig. 1 ablaufen. Im Block 249 wird das Verfahren gestartet. Dieser Start kann einerseits gleichzeitig mit dem Start eines die Bremswirkung beeinflussenden Regelverfahrens, wie ABS, ASR, FDR erfolgen bzw. zusammen mit einem solchen Reglereingriff durchgeführt werden, andererseits kann der Startvorgang auch beispielsweise mit Einschalten der Zündung durchgeführt werden, wobei in beiden Fällen die Möglichkeit existiert, daß das aufgezeigte Verfahren permanent im Hintergrund läuft und so ständig Druckschätzwerte zur Verfügung stellt. Im Block 250 wird eine Zählvariable k für die verschiedenen Durchläufe auf einen vorgegebenen Wert, beispielsweise 0 gesetzt. In Abfrage 251 wird überprüft, ob sich die jeweilige Regelung, wie beispielsweise ABS, ASR, FDR im ersten Regelzyklus befindet. Ist dies nicht der Fall, so gelangt man zu Block 258, in welchem der Raddruck bzw. Radbremsdruck prad beispielsweise aus einem Hydraulikmodell ermittelt werden kann. Die Grundlage der Raddruckschätzung auf der Basis eines Hydraulikmodells ist die Berechnung des Radbremsdruckes nach folgenden Gleichungen:

$$prad(k+1) = prad(k) + pVkenn \cdot \sqrt{pdiff(k)} \cdot tVent(k)$$

$$pVkenn = f\big(prad(k)\big) \qquad \qquad \text{Gl}(1) \; ,$$

$$pdiff_k = \begin{cases} prad(k) \\ pvor(k) - prad(k) \end{cases} mit \begin{matrix} tVent(k) < 0 \\ tVent(k) > 0 \end{matrix}$$

wobei für *tVent* gilt:

*tVent* < 0: Druckabbau,
*tVent* > 0: Druckaufbau,
*tVent* = 0: Druckhalten.

Ausgehend von einem Startwert prad(0), für k=0, läßt sich der aktuelle Raddruck bzw. Radbremsdruck prad(k+1) mit dem Vordruck pvor(k), dem Raddruck prad(k) und der Ventilansteuerzeit tVent(k) der Vergangenheit laufend extrapolieren. Wobei der Startwert prad(0) aus dem Vordruck pvor ermittelt werden kann. Wenn sich somit die Regelung nicht im ersten Regelzyklus befindet, so stehen in Block 258 der notwendige Startwert prad(0) und die übrigen notwendigen Größen zur Verfügung. Wird in Abfrage 251 allerdings festgestellt, daß sich der Ablauf im ersten Regelzyklus befindet, so gelangt man zur Abfrage 252. Im ersten Regelzyklus, wenn der Vordruck pvor und damit der Startwert des Raddrukkes bzw. Radbremsdruckes prad(0) noch nicht vorliegen, kann das Hydraulikmodell ohne Zusatzmaßnahmen nicht verwendet werden. Im Stand der Technik bei Einsatz eines Vordrucksensors kann ein Hydraulikmodell verwendet werden, weil der Startwert des Raddruckes prad(0) aus dem gemessenen Vordruck pvor abgeleitet werden kann. Im ersten Regelzyklus, wenn der Pumpenmotor 202 noch nicht fördert, ist die Vordruckschätzung mit dem Pumpenmotor 202 aber nicht realisierbar. Aus diesem Grund kann der Startwert prad(0) der Integrationsgleichung des Hydraulikmodells Gl(1) nicht aus dem Vordruck pvor ermittelt werden.

Wird in Abfrage 251 festgestellt, daß es sich noch um den ersten Regelzyklus handelt, so gelangt man zur Abfrage 252.

In dieser wird nun ermittelt, ob das Ende des ersten Regelzyklus erreicht ist oder innerhalb einer vorgebbaren Zeit bzw. Anzahl von Abtastzeitpunkten erreicht wird. Ist dies der Fall stehen die notwendigen Größen zur weiteren Berechnung in Block 254 zur Verfügung. Es kann somit in Block 254 die Fahrzeugverzögerung bzw. negative Fahrzeugbeschleunigung ax mittels

$$ax = \frac{(vradb - vrada)}{tab} \qquad \mathrm{Gl(2)}$$

ermittelt werden. Dies wird an Hand Fig. 5 später noch genauer erläutert. Aus der ermittelten Fahrzeugverzögerung ax kann nun der ebenfalls zur weiteren Berechnung verwendete Reibkoeffizient $\mu$ nach folgender Gleichung berechnet werden:

$$\mu = -\frac{ax}{g} \qquad \mathrm{Gl(10)}$$

Wird in Abfrage 252 allerdings festgestellt, daß das Ende des ersten Regelzyklus noch nicht erreicht ist, gelangt man zu Block 253. Hierbei werden dann die noch unbekannten Größen, die Fahrzeugverzögerung ax und der Reibkoeffizienten $\mu$ vorgegeben. Der vorgebbare Reibkoeffizient $\mu$ im Block 253 wird dabei aus Sicherheitsgründen größer angenommen. Beispielsweise bei Einsatz in einer ABS-Regelung wird zugunsten einer sicheren ABS-Bremsung der Reibwert $\mu > 1$, beispielsweise zu 1,4 angenommen. Mittels oben genannter Gleichung Gl(10) läßt sich aus dem vorgebbaren Reibkoeffizienten $\mu$ die Fahrzeugverzögerung bzw. negative Fahrzeugbeschleunigung ax bestimmen. Im Anschluß gelangt man zur Abfrage 255, wo abgefragt wird ob eine Hochlaufphase vorliegt oder nicht. Mit Hochlaufphase ist in diesem Zusammenhang der Radhochlauf, insbesondere nach einem Regeleingriff, gemeint. Beispielsweise bei ABS bedeutet dies, daß die Radgeschwindigkeit nachdem sie durch den Bremseneingriff abgesunken ist aufgrund einer erkannten Blockierneigung des Rades und daraus folgendem Druckabbau wieder zunimmt. Diese beispielsweise bei FDR radindividuelle Geschwindigkeitszunahme kann beispielsweise mittels der Raddrehzahlsensoren 245 bis 248 erfaßt werden. Ist die Hochlaufphase erkannt, gelangt man zu Block 256. Darin wird während der Hochlaufphase innerhalb des ersten Regelzyklus zusätzlich an Stelle der Radbeschleunigung arad die aktuelle maximale Radbeschleunigung aradmax bestimmt und für die weitere Berechnung eingesetzt. Die Bestimmung von aradmax erfolgt beispielsweise durch Vergleich des Beschleunigungswertes zu jedem Abtastzeitpunkt mit dem vorhergehenden Radbeschleunigungswert arad. Für die weitere Berechnung wird in diesem Fall die Radbeschleunigung arad gleich der maximalen Radbeschleunigung aradmax gesetzt. Am Ende des ersten Regelzyklus wird der bislang angenommene Wert der Fahrzeugverzögerung ax durch Gleichung 2 in Block 254 korrigiert. Daraus kann dann nach Gleichung 10 ebenfalls in Block 254 der Reibkoeffizient $\mu$ aktualisiert werden.

Befindet man sich nach Abfrage 255 nicht in einer Radhochlaufphase gelangt man direkt zu Block 257. Dabei kann dann entweder ein Wert für die Radbeschleunigung arad vorgegeben werden oder der aktuell beispielsweise über die Raddrehzahlsensoren bestimmte Wert Verwendung finden. Ebenso zu Block 257 gelangt man aus Block 256 und Block 254. In diesem Ausführungsbeispiel bedeutet dies, daß im ersten Regelzyklus (251) der Radbremsdruck bzw. Raddruck prad nicht aus einem Hydraulikmodell wie beispielsweise nach Gleichung Gl(1) berechnet werden kann und deshalb in Block 257 anderweitig bestimmt werden muß. Eine grobe Raddruckschätzung aus der Fahrzeugverzögerung ax ist in folgender Gleichung möglich:

$$prad = \frac{rrad \cdot \left(-mF \cdot ax + Fkorr\right)}{2 \cdot \left(cpv + kab \cdot cph\right)} \qquad \text{Gl(7)}$$

Der dabei entstehende grobe Wert für den Raddruck bzw. Radbremsdruck prad ist der mittlere Raddruck im ersten Regelzyklus und dient im wesentlichen als Richtwert für die Raddruckschätzung einzelner Räder, die mit dem nächsten Ansatz ermittelt wird.

$$prad = \frac{0.5 \cdot \mu \cdot mF \cdot \left(g \cdot L \mp ax \cdot \kappa\right) \cdot rrad - \dfrac{Jrad \cdot arad}{rrad}}{cp} \qquad \text{Gl(9)}$$

Mit vorgenannter Gleichung Gl(9) ist nun eine genauere Abschätzung des Raddruckes prad als mit Gleichung Gl(7) möglich. Dabei wird beispielsweise zwischen Vorder- und Hinterrad unterschieden. Somit ist cp in Gleichung Gl (9), der Bremsmomentkoeffizient, für Vorder- und Hinterrad unterschiedlich, wenn beispielsweise am Hinterrad ein Druckminderer eingesetzt ist. So ist der Bremsmomentkoeffizient am Vorderrad unverändert und wird dort mit cpv (=cp) bezeichnet. Für das Hinterrad allerdings, beispielsweise durch Einsatz eines Druckminderers ist der Bremsmomentkoeffizient cp mit einem Abschwächungsfaktor kab für das Hinterrad beaufschlagt und ist somit kab * cph, wobei cph dem Bremsmomentkoeffizient des Hinterrades entspricht und auch mit cpv identisch sein kann. Ebenso ist in obiger Gleichung die Größe L in welche die Hinterradachslast ψ einfließt für Vorder- und Hinterrad unterschiedlich. Für das Hinterrad entspricht die Größe L der Hinterachslast ψ, für das Vorderrad hingegen ist für L, 1-ψ einzusetzen. Außerdem steht das "-" Vorzeichen vor ax für vordere Räder und das "+" Vorzeichen vor ax für hintere Räder. Dieser mit Gleichung Gl(9) bzw. mit Gleichung Gl(7) berechnete Radbremsdruck bzw. Raddruck prad dient dann für k=0 als Startwert prad(0) für die Raddruckschätzung mit Hilfe des Hydraulikmodells nach Gleichung Gl(1).

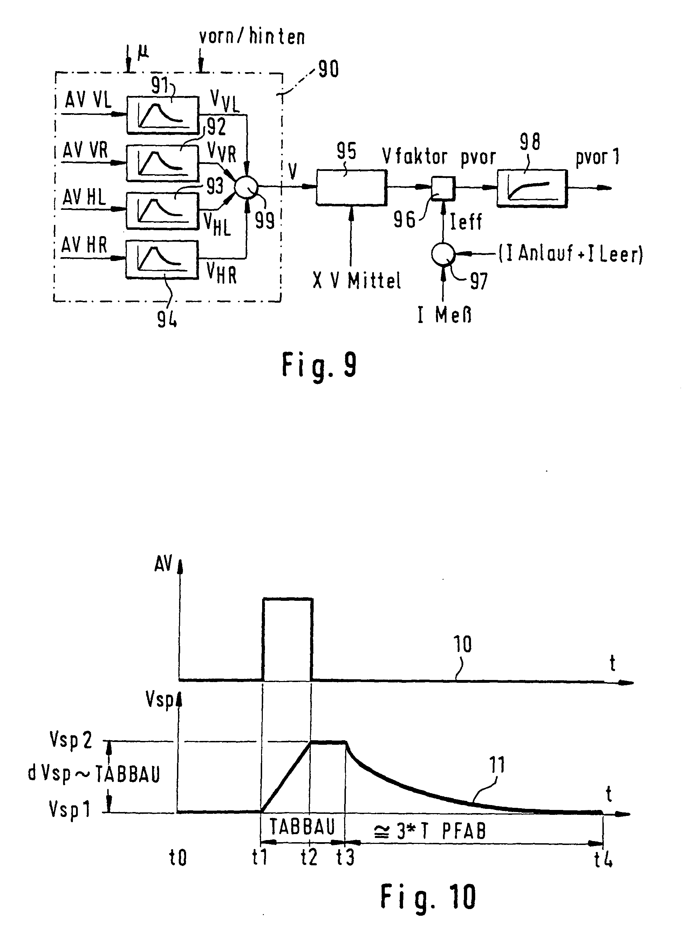

Aus Block 257 wie aus Block 258 gelangt man zur Abfrage 259. Dort wird abgefragt ob eine Vordruckschätzung mittels Pumpenmotor 202 und/oder 201 vorhanden bzw. bereits durchgeführt ist. Dies kann beispielsweise einfach dadurch geschehen indem ermittelt wird ob ein Vordruckwert pvor vorliegt oder nicht. Eine weitere Möglichkeit ist in Abfrage 259 zu überprüfen ob die zur Vordruckschätzung in Block 261 notwendigen Eingangsgrößen (siehe Gleichungen zur Vordruckschätzung ab Fig. 9) zur Verfügung stehen oder nicht. Ist dies der Fall wird also in Abfrage 259 ermittelt daß eine Vordruckschätzung mittels Pumpenmotor 202 und/oder 201 vorhanden ist, gelangt man zu Block 261, der eigentlichen Schätzung des Vordruckes. Diese Vordruckschätzung nach Block 261 wird später detailliert an Hand der Figuren 9 bis 15 offenbart. Zwei einfache Möglichkeiten sollen aber schon vorab kurz dargestellt werden.

Die Idee der Vordruckschätzung liegt darin, daß das erforderliche Moment des Pumpenmotors 202 und/oder 201 bei Rückförderung direkt proportional zu dem Vordruck ist. Da das Moment von der Stromaufnahme oder der Drehzahl abhängig ist, folgt die Schätzung des Vordruckes über die Messung einer dieser Größen. So kann dies einerseits erfolgen über die Messung der Drehzahl des Pumpenmotors, indem nach definierter Ansteuerzeit die induzierte Motorspannung UNachlauf gemessen wird. Anstelle der Drehzahl kann auch der Drehzahlabfall des Pumpenmotors über der Zeit gemessen werden. Dies erfolgt dann indem nach definierter Ansteuerzeit die induzierte Motorspannung Unachlauf zweimal innerhalb eines Zeitfensters gemessen wird. Dabei ist die Abhängigkeit aber nur vorhanden, wenn gefördert wird. Die Abhängigkeit ist dabei stark spannungs- und temperaturabhängig und der Einfluß der Fertigungssteuerung darf dabei nicht vernachlässigt werden.
Eine bessere Möglichkeit bietet die Messung der Stromaufnahme des Pumpenmotors 202 und/oder 201. Die Stromaufnahme des Pumpenmotors 202 und/oder 201 nimmt linear mit dem Moment zu. Die Messung der Stromaufnahme kann dabei beispielsweise über einen Meßwiderstand, eine Messung des Spannungsabfalls an einem Schalttransistor oder eine Messung des Spannungsabfalls an einer Zuleitung erfolgen.

Die Vordruckschätzung mit dem Pumpenmotor 202 und/oder 201 findet dabei aber erst während des ersten Regelzyklus statt. Solange die Vordruckschätzung noch nicht vorliegt, muß der Vordruck pvor auf andere Art bestimmt werden. Dazu kann beispielsweise folgende Gleichung dienen:

$$pvor = fauf \cdot prad \qquad \text{Gl(12)}$$

z.B. mit 1.5< *fauf* <2.0

Damit wird der Vordruck aus dem Radbremsdruck berechnet. Dabei stellt die Größe fauf das Verhältnis pvor/prad, also des Vordruckes pvor zum Radbremsdruck prad dar und kann erfahrungsgemäß oder aus Laborwerten vorzugsweise zwischen 1,5 und 2,0 gewählt werden. Die in 260 getroffene Vorgabe des Vordruckes pvor kann notwendig sein, wenn die Ventilansteuerzeit tVent beispielsweise wie im Stand der Technik über ein inverses Hydraulikmodell aus dem Vordruck pvor, dem Radbremsdruck prad, dem Radbremssolldruck pradsoll und der Volumenkennlinie pVkenn ermittelt wird. Dabei ist pradsoll der vom jeweiligen Regler bzw. System (ABS, ASR, FDR, etc.) bestimmte Sollwert für den Raddruck. Ebenso könnte die Ansteuerzeit tVent aus einem Kennfeld entnommen werden. Der nun in Block 260 oder Block 261 ermittelte Vordruck pvor wird nun in Block 262 zur Bestimmung der Ansteuerzeit tVent der Ventile, insbesondere der Ein- und/oder Auslaßventile 209 bis 212, eingesetzt. Ebenso kann der ermittelte Vordruck pvor zur Bestimmung der Ansteuerzeit für weitere Stellglieder in der Bremsanlage, wie beispielsweise der das Druckmedium fördernden Mittel, insbesondere der Rückförderpumpe 203 bzw. der Vorladepumpe 200 oder der Umschaltventile 205 sowie der Vorladeventile 204 verwendet werden.

In Abfrage 264 wird daraufhin geprüft, ob ein weiterer Durchlauf durchgeführt werden soll oder nicht. Ist dies nicht der Fall gelangt man zu Block 265, dem Verfahrensende. Im anderen Fall wird im Block 263 die Laufvariable k bzw. der Zähler um 1 erhöht. Sollte dieses Verfahren nur bei Regeleingriff durch beispielsweise ABS, ASR, FDR durchgeführt werden, wird in Block 264 überprüft ob ein solcher Regeleingriff vorliegt. Sollte das Verfahren im zweiten Fall ständig im Hintergrund ablaufen, ist das Entscheidungskriterium in Abfrage 264 beispielsweise das Ein- und Ausschalten des Zündschlosses. Aus Block 263 gelangt man wieder zur Abfrage 251 ob der erste Regelzyklus vorliegt oder nicht. Ab dem zweiten Regelzyklus wird die Raddruck- bzw. Radbremsdruckschätzung dann über das Hydraulikmodell nach Gleichung Gl(1) durchgeführt. Diese kann eben dann begonnen werden wenn der Startwert des Raddruckes bzw. Radbremsdruckes prad feststeht. D.h. vor dem zweiten Regelzyklus liegt die Schätzung über den Pumpenmotor bereits vor. Die Raddruck- und Vordruckschätzung werden für die Regelung fortlaufend verwendet. Dies bedeutet auch, daß die Laufvariable bzw. der Zähler k nicht gleichbedeutend mit der Anzahl der Regelzyklen sein muß, aber sein kann.

Fig. 3 zeigt ein weiteres Ausführungsbeispiel, welches aus dem in Fig. 2 dargestellten Verfahren entwickelt wurde. Zur alternativen Druckschätzung wird dabei ein Ansatz 1 verwendet. Der Startvorgang nach Block 249 geschieht nach den gleichen Voraussetzungen wie im Ausführungsbeispiel nach Fig. 2. Ebenso wird in Block 250 die Laufvariable bzw. der Zähler k zu 0 gesetzt. Diesmal allerdings gelangt man aus Block 250 direkt zu einer Abfrage 300, in der nun geprüft wird, ob eine Vordruckschätzung mittels Pumpenmotor möglich ist. Dies kann vergleichbar zu Abfrage 259 in Fig. 2 dadurch geschehen, daß überprüft wird, ob die zur Vordruckschätzung nach Block 261 notwendigen Größen vorhanden bzw. ermittelbar sind. Ist dies der Fall so gelangt man wiederum zu Block 261 in dem wie in Fig. 2 die Vordruckschätzung durchgeführt wird. Ausgehend von diesem Vordruckwert pvor wird dann der Raddruck bzw. Radbremsdruck prad in Block 258 aus dem Hydraulikmodell nach Gleichung Gl(1) bestimmt. Sind die nach Block 261 notwendigen Größen nicht vorhanden, ist beispielsweise eine Vordruckschätzung mittels Pumpenmotor 202 und/oder 201 nach Abfrage 300 nicht möglich, so gelangt man zu Block 253, in welchem ein Reibkoeffizient $\mu$ unter Einbeziehung von Sicherheitsüberlegungen vorgegeben wird. Aus dieser Vorgabe läßt sich wiederum nach Gleichung Gl(10) eine Fahrzeugverzögerung ax annehmen. Mit diesen Vorgaben wird in Block 301 der Raddruck prad aus der bereits genannten Gleichung Gl(9) ermittelt. Eine Richtwertermittlung des Raddruckes prad nach Gleichung Gl(7) erfolgt in Block 301 nicht. Denkbar wäre hier aber ebenso der Einsatz des Block 257 aus Fig. 2, welcher dann den Block 301 ersetzen würde. In diesem Ausführungsbeispiel wird direkt nach Ermittlung des Radbremsdruckes prad aus Gleichung Gl(9) der Vordruck pvor aus Gleichung Gl(12) nach Block 260 bestimmt. Nach Ansatz 1 liegt somit der Radbremsdruck prad aus Block 301 und der Vordruck pvor aus Block 260 vor. Im anderen Fall dieses Ausführungsbeispiels liegen beide Größen aus Block 261 (pvor) und Block 258 (prad) vor. Mit den so ermittelten Größen kann wiederum in Block 262 wie im vorhergehenden Ausführungsbeispiel die Berechnung der Ansteuerzeit tVent für in der Bremsanlage vorhandene Stellglieder, insbesondere der Ventile, erfolgen. Wiederum wird in Block 264 überprüft ob weitere Durchläufe durchgeführt werden sollen. Ist dies nicht der Fall gelangt man wieder zum Programmende (265). Im anderen Fall wird der Zähler bzw. die Laufvariable k in Block 263 wiederum um 1 erhöht und man gelangt erneut zur Abfrage nach Block 300.

Eine weitere Variante ergibt sich nach dem Ausführungsbeispiel in Fig. 4. Diese ist vergleichbar zur Variante in Fig. 3 mit Ausnahme des Ansatzes 1, der hier durch einen Ansatz 2 ersetzt ist. Die Beschreibungen der gleich bezeichneten Blöcke sind den Fig. 2 und 3 zu entnehmen. Ist in Fig. 4 eine Vordruckschätzung mittels Pumpenmotor 202 und/oder 201 nach Abfrage 300 nicht möglich, so wird die Fahrzeitverzögerung ax aus Radsignalen nach Block 400 ermittelt. Dies kann beispielsweise durch die Auswertung der Sensordaten der Raddrehzahlsensoren 245 bis 248 erfolgen. Eine so ermittelte Fahrzeugverzögerung ax nach Block 400 kann selbstverständlich auch in den vorhergehenden Ausführungsbeispielen nach Fig. 2 und 3 Verwendung finden. Hier wird nun der Vordruck pvor in Block 401 nach folgender Gleichung ermittelt:

$$pvor = faktor \cdot ax \qquad\qquad Gl(15)$$

Dieser Gleichung liegt die Idee zugrunde, daß der zu ermittelnde Vordruck pvor und die Fahrzeugverzögerung ax korreliert, insbesondere proportional sind und mittels einem Faktor *faktor* verknüpft werden können. Dieser Faktor kann beispielsweise aus Meßwerten bestimmt und/oder aus einem Kennfeld entnommen werden. So ist es ebenfalls möglich den Proportionalfaktor faktor vorab in einer Lernphase beispielsweise als Mittelwert aller oder der meisten vorkommenden Regelungssituationen bei die Bremswirkung beeinflussenden Systemen (ABS, ASR, FDR, etc.) vorzugeben. Der so in Block 401 ermittelte Vordruck pvor wird nun in Block 258 zur Bestimmung des Raddruckes prad aus dem Hydraulikmodell nach Gleichung Gl(1) eingesetzt. Der weitere Ablauf entspricht dem in Fig. 2 bzw. Fig. 3 bereits beschriebenen.

In Fig. 5 ist an Hand einer Darstellung der Radgeschwindigkeit vrad über der Zeit aufgezeigt wie die Fahrzeugverzögerung ax nach Gleichung Gl(2) bestimmt wird. Die Kurve 500 zeigt dabei den Verlauf der Radgeschwindigkeit unter dem Einfluß eines Regeleingriffs, wie beispielsweise ABS, ASR, FDR. Bis zum Zeitpunkt ta erfolgt beispielsweise der Druckaufbau woraufhin sich die Radgeschwindigkeit verlangsamt. Im Übergang zur Phase Druckhalten eben in Punkt 501 wird die dabei auftretende Radgeschwindigkeit vrada beispielsweise durch Umrechung der Werte aus den Raddrehzahlsensoren 245 bis 248 bestimmt und gespeichert. Nach dem Druckabbau wenn sich das Rad ab thb im Hochlauf befindet in einer weiteren Druckhaltenphase wird dann die Radbeschleunigung arad, insbesondere die maximale Radbeschleunigung aradmax in Form der größten Kurvensteigung der Kurve 500 ab thb ermittelt und gespeichert. Der Beginn des Radhochlaufs befindet sich wie bereits erwähnt zum Zeitpunkt thb am Ende der Druckabbau- und am Beginn der Druckhaltenphase. Bis zum Zeitpunkt tb wird somit die maximale Radbeschleunigung aradmax ermittelt, die sich beispielsweise bei taradmax befindet. Am Ende des Radhochlaufs zu Beginn der nächsten Druckaufbauphase 502 zum Zeitpunkt tb wird dann die vorliegende Radgeschwindigkeit vradb ermittelt und gespeichert. Aus der Differenz der beiden Radgeschwindigkeiten im Verhältnis zu Δtab der Differenz der Zeiten ta, tb ihres Auftretens kann dann die Fahrzeugverzögerung ax ermittelt werden. Der Zeitpunkt der Ermittlung des Raddruckes nach dem ersten Regelzyklus kann somit tb sein. Dabei ist nun wichtig, daß an dem gemessenen Rad kein Schlupf und keine Blokkierung auftritt, bzw. eine solche erkannt wird, da sonst falsche Werte entstehen. Dies kann einmal dadurch erreicht werden, daß die Fahrzeugverzögerung ax aus Radgeschwindigkeiten vrad ermittelt wird, die über alle Räder gemittelt sind.

Eine weitere Möglichkeit zur Verhinderung falscher Werte und zur Erhöhung der Güte der Schätzung ist eine Plausibilitätsprüfung. Unmittelbar nachdem die Fahrzeugverzögerung ax mit Gleichung Gl(2) berechnet wurde und damit μ über Gleichung Gl(10) feststeht, wird der Raddruck prad über Gleichung Gl(7) und Gleichung Gl(9) berechnet. Hierbei erfolgt die Berechnung radweise. Die Fahrzeugverzögerungen ax aller Räder können auf Plausibilität geprüft werden. Die Fahzeugverzögerung ax ist eine Fahrzeuggröße und muß deshalb für alle Räder gleich sein. Bei homogener Fahrbahn, sollte auch die Berechnung über Gleichung Gl(9) an allen Rädern gleiche Werte liefern. Grundlage der Plausibilitätsprüfung sind die Beziehungen bei homogenen Fahrbahnen bezüglich beispielsweise des Raddruckes der Vorderräder pradv und der Hinterräder pradh je nach Bremskreisaufteilung. Der Raddruck am Vorderrad pradv entspricht dem Raddruck prad und am Hinterrad tritt dabei wieder im Falle eines Druckminderers der Abschwächungsfaktor kab als Faktor auf (pradh = kab * prad). Durch Einsetzen dieser Beziehungen und radspezifischer Größen (darunter auch ax) in Gleichung Gl(7) und Gleichung Gl(9) erhält man insgesamt acht Werte von Prad, die z. B. durch Mittelwertbildung egalisiert werden können und/oder direkt verglichen werden können. Solange ax nicht durch Steigungsberechnung nach Gleichung Gl(2) ermittelt wird, steht natürlich aus Gleichung Gl(7) nur ein Wert zur Verfügung. In diesem Fall stehen zur Mittelwertbildung und/oder zum Vergleich nur fünf Werte zur Verfügung. Durch die Plausibilitätsprüfung können dann ebenfalls ausgehend von den acht bzw. fünf Werten Abweichungen an einzelnen Rädern ermittelt und bewertet werden.

Der Sonderfall einer μ-Split-Bremsung bei unterschiedlichen Reibwerten μ durch z.B. unterschiedliche Fahrbahnoberflächen oder -eigenschaften ist in den Fig. 6 und 7 dargestellt. Im Fall einer μ-Split-Bremsung treten beispielsweise seitenweise an den Rädern unterschiedliche Reibwerte μ auf. Um das durch μ-Split verursachte Giermoment abzuschwächen, muß der Momentenanstieg auf der High-Seite begrenzt werden, das bedeutet, daß der Momentenanstieg auf der Seite begrenzt werden muß bzw. an den Rädern begrenzt werden muß, die sich auf dem griffigeren Fahrbahnteil, also dem mit höherem Reibkoeffizienten μ befinden, also den High-Rädern. Dazu ist in Fig. 7 die Radgeschwindigkeit für ein Low-Rad (glatterer Fahrbahnteil, kleineres μ) bzw. ein High-Rad über der Zeit aufgetragen. Fig. 7 zeigt dazu korreliert mit den Fahrgeschwindigkeiten aus Fig. 7 den Druckverlauf für ein High-Rad und ein Low-Rad über der Zeit. Da aus den Fahrzeugverzögerungen ax im Fall einer μ-Split-Bremsung ein mittleres μ berechnet wird, liefert die Berechnung nach Gleichung Gl(7) und Gleichung Gl(9) im allgemeinen beispielsweise bei ABS zu hohe Werte für ein Low-Rad und zu niedrige Werte für ein High-Rad. Durch die Anstiegsbegrenzung auf der High-Seite ist der Fehler im Vergleich zu dem Fall ohne Begrenzung jedoch klein. Im Fall einer μ-Split-Bremsung gehen die Low-Räder zuerst in Regelung, beispielsweise in ABS-Regelung. Die Raddruckschätzung wird automatisch nur für Low-Räder durchgeführt bis die High-Räder auch in Regelung, beispielsweise ABS-Regelung gehen. Zur Mittelwertbildung des Raddruckes prad für die Low-Räder stehen dann vier bzw. drei Werte zur Verfügung. Eine μ-Split-Erkennung ist insofern nicht notwendig. Da die Anstiegsbegrenzung vom Fahrzeugregler vorgegeben wird und bekannt ist, kann der Raddruck der High-Räder unmittelbar aus Ergebnissen der Low-Räder unter Berücksichtigung der Anstiegsbegrenzung berechnet werden.

Fig. 8 zeigt noch einmal eine schematische Darstellung des Ablaufs der Schätzung an Hand dreier Diagramme. Einmal ist der Druck p über der Zeit t aufgetragen. Darin sind qualitativ der Kurvenverlauf des Vordrucks pvor und eines Raddruckes prad aufgetragen. Zum Zeitpunkt ta ist hier nun im Druckdiagramm p(t) deutlich der Übergang beim Radbremsdruck prad von Druckaufbau in Druckhalten zu erkennen. Die Darstellung der Motorspannung UPM des Pumpenmotors wurde gewählt um den Einsatz der Pumpe deutlich zu machen. Die Zeitpunkte der Druckschätzung pvor und prad sind kenntlich gemacht. Ebenso die Schätzung des Startwertes prad(0) für das Hydraulikmodell nach Gleichung Gl(1). Die Zeitspanne für einen Regelzyklus z.B. bei einer ABS-Regelung ist hier zwischen ta und tb offenbart. An dem Geradenstück mit -1,4g ist noch einmal die angenommene Verzögerung im Verhältnis zur realen Fahrzeugverzögerung ax dargestellt und gezeigt, daß der Reibkoeffizient μ aus Sicherheitsgründen größer gewählt ist.

Bei Block 261 in Fig. 2 wurde bereits auf eine detaillierte Darstellung einer Vordruckschätzung in diesem Block durch die Figuren 9 bis 15 hingewiesen. Die bevorzugte Ausführungsform der Vordruckschätzung in Block 261 der Fig. 2, 3 und 4 erfolgt aus einer Stromaufnahme eines Pumpenmotors und einer Volumenbilanz des Druckmediums, insbesondere der Bremsflüssigkeit als Ersatz für einen Vordrucksensor für Bremsregelungsanwendungen bzw. Systemen zur Beeinflussung der Bremswirkung (ABS, FDR, ASR, etc.). Eine Vordruckinformation ist einerseits für die vorher genannte Radbremsdruckschätzung aber ebenso beispielsweise für die Fahrdynamikregelung allgemein notwendig. Die Grundidee dieser Druckschätzung, insbesondere Vordruckschätzung liegt darin, daß der erforderliche Strom des Pumpenmotors während der Abbauphase der Regelung ein Maß für die Fördermenge an Druckmedium und den vorliegenden Vordruck pvor darstellt.

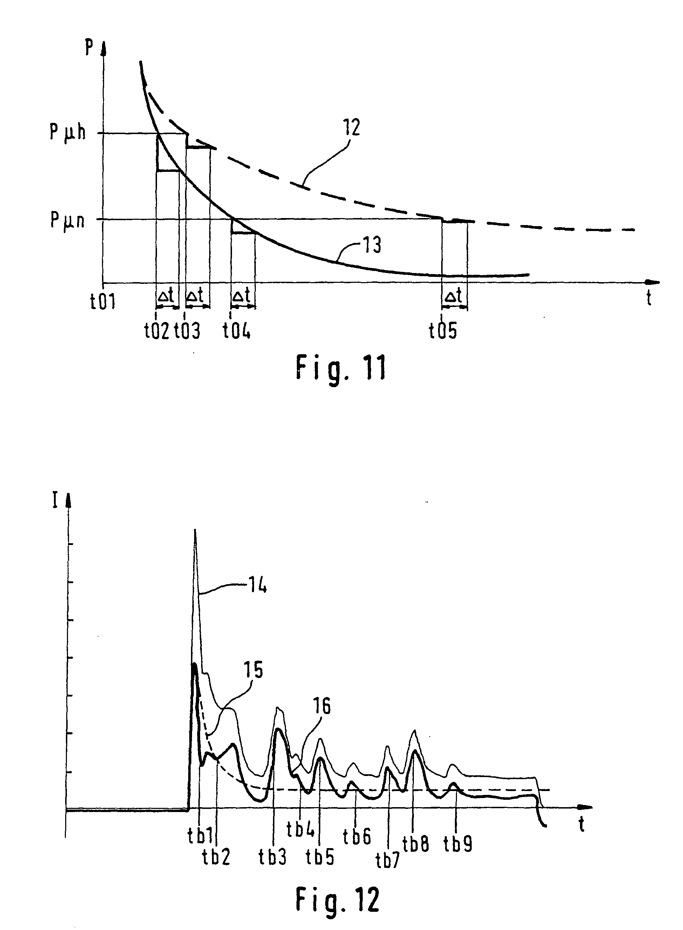

Aus den Informationen Pumpenstrom und Fördermenge läßt sich der Vordruck pvor dann ermitteln. Fig. 9 zeigt dazu eine Übersichtsdarstellung der Vordruckschätzung. Zusätzlich wird darin die der Druck pvor der Schätzung mit einem Verzögerungssystem (Block 98) gefiltert. Zur Ermittlung des Mittelwertes XVMittel in einer Lernphase werden nur Messungen zum Zeitpunkt des Beginns der Förderung bewertet (vgl. Fig. 12). In Block 90 von Fig. 9 wird das gesamte zu fördernde Volumen V gebildet und an Block 95 ausgegeben. Als Eingangsgrößen dienen der Reibkoeffizient μ und im Fall spezieller Bremskreisaufteilungen beispielsweise hier die Unterscheidung nach Vorder- und Hinterrad vorn/hinten. In den Blöcken 91 bis 94 ist die Volumenbilanz (vgl. Fig. 10) bezüglich der jeweilige Radbremse enthalten. Eingangsgrößen in diese Blöcke 91 bis 94 sind die jeweiligen Ansteuersignale der Auslaßventile AWL, AVVR, AVHL, AVHR. Daraus werden dann die Volumina der einzelnen Räder bzw. Radbremsen ermittelt. Diese sind VVL (entspricht dem Volumen vorne links), VVR (Volumen vorne rechts), VHL (Volumen hinten links), VHR (Volumen hinten rechts). Die Verknüpfung dieser Volumina in Block 99 beispielsweise durch Summenbildung ergibt das Gesamtvolumen V, das dem Block 95 übergeben wird. Durch Hinzunahme eines Proportionalfaktors XVMittel und Verknüpfung mit dem Volumen V wird ein Volumenfaktor Vfaktor gebildet. Der Volumenfaktor Vfaktor entsteht beispielsweise durch Quotientenbildung aus XVMittel und dem Volumen V. Der Volumenfaktor Vfaktor wird seinerseits einem Block 96 zugeführt und dort mit einem effektiven Stromanteil Ieff, beispielsweise durch Multiplikation, verknüpft. Daraus entsteht ein geschätzter Vordruck pvor, der dann noch einem Block 98 zugeführt werden kann. Diesem Ausführungsbeispiel ist in Block 98 ein Verzögerungsglied erster Ordnung enthalten wodurch der Vordruck pvorl entsteht.Der Effektive Stromanteil Ieff wird durch Verknüpfung des Anlaufstroms IAnlauf und des Leerlaufstroms ILeer sowie des gemessenen Stromanteil IMeß in Block 97 gebildet. Vorteilhafter Weise geschieht das durch Differenzbildung. Der dieser Fig. 9 zugrunde liegende allgemeine Ansatz wird im folgenden erläutert.

Da hier versucht wird mit einem Festwert XVMittel die schätzung zu erzielen, muß der Schätzer so ausgelegt werden, daß die Streuung des Proportionalfaktors XV so klein wie möglich gehalten wird. XVMittel wird unter der Berücksichtigung der folgenden Einflußgrößen der Volumenbilanz bestimmt: Temperatur T, Raddbremsdruck prad(hohe oder niedrige Kraftschlußbeiwerte), Bremskreis. Das Auswahlkriterium ist dabei das Minimieren des Schätzfehlers über alle Betriebsbedingungen des Regeleingriffs, z.B. Bremsvorgangs. Vor diesem Hintergrund ist ein Kompromiß bei der Ermittlung von XVMittel angezeigt. Um Unterbremsung zu vermeiden, wird XVMittel so ausgelegt, daß die Druckschätzung eher zu groß als zu klein sein wird

Der zur Förderung benötigte Strom des Pumpenmotors I wird direkt proportional zu dem Fördervolumen V und dem Vordruck pvor angenommen.

$$I = f(V, pvor) = \frac{1}{XV} \cdot V \cdot pvor \qquad \text{Gl(1v)}$$

Der Proportionalfaktor XV wird beispielsweise vorab in einer Lernphase bzw. Laborphase aus gemessenem Vordruck, Strom I nach gebildetem Fördervolumen V bestimmt.

$$XV = V \cdot \frac{pvor}{I} \qquad\qquad \text{Gl(2v)}$$

Mit dem gelernten Mittelwert des Proportionalfaktors XVMittel, der so bestimmt wird, daß er für möglichst alle vorkommende Bremssituationen gültig ist, kann der Vordruck pvor dann während des Regeleingriffs geschätzt werden.

$$pvor = XVMittel \cdot \frac{I}{V} \qquad\qquad \text{Gl(3v)}$$

Dabei wird XVMittel in der Lernphase beispielsweise nach folgender Gleichung bestimmt:

$$XVMittel = \frac{1}{n} \sum_{j} \frac{pvor(j) \cdot V(j)}{Ieff(j)} \qquad\qquad \text{Gl(11v)} \; ,$$

wobei j den Zeitpunkten der Bewertung und n der Anzahl der Bewertung entspricht.

Der Volumenfaktor Vfaktor wird aus dem Mittelwert des Proportionalfaktors XVMittel beispielsweise dadurch bestimmt, daß XVmittel durch das Volumen V geteilt wird. Die Streuung des Proportionalfaktors XV kann minimiert werden, wenn bei der Nachbildung des Fördervolumens V sämtliche Einflußgrößen berücksichtigt werden.

Fig. 10 veranschaulicht dazu die Nachbildung des Fördervolumens V mit einem Volumenmodell in Block 90. Es wird dabei kein aufwendiges strömungstechnisches Modell verwendet. Vielmehr soll der Fördervorgang vom jeweiligen Auslaßventil, beispielsweise 211, 212, 211a und 212a, über die Speicherkammer zur Bremsleitung mit einem einfachen Verzögerungsmodell beschrieben werden. Wird die Speicherkammer 206 bzw. 206a als Bezug genommen, kann die normierte Volumenbilanz fabbz in der Speicherkammer 206 bzw. 206 zeitlich in der digitalen Darstellung wie folgt, beschrieben werden:

$$fabbz = \begin{cases} fabbz + uven & solang \cdot das \cdot Auslaßventil \cdot offen \cdot ist \\ fabbz & wenn \cdot Auslaßventil \cdot wieder \cdot geschlossen \\ pfab \cdot fabbz & ab \cdot Zeitpkt \cdot Beginn \cdot TABBAU \end{cases} \quad \text{Gl(4v)}$$

Die digitale Darstellung fabbz=fabbz+uven zu jedem Abtastzeitpunkt deutet lediglich die Summe der Abbauzeiten in der Abbauphase an. Zum Zeitpunkt des geschlossenen Auslaßventils bleibt der Inhalt von fabbz konstant und beträgt den Wert Σ(uven), falls fabbz am Anfang der Summenbildung zu Null gesetzt wird. Wobei uven die Abbauzeit des Ventils (t2-t3 in Fig 10) darstellt. Die Größe pfab ist durch

$$pfab = \exp\left(-\frac{TA}{TPFAB}\right) \qquad\qquad \text{Gl(5v)}$$

dargestellt, wobei TA der Abtastzeit und TPFAB der Zeitkonstante der Förderung durch beispielsweise die Rückförderpumpe 203 bzw. 203a entspricht. In Fig. 10 ist dazu repräsentativ ein Ansteuersignal AV für ein Auslaßventil (211, 212) dargestellt. Dieses Ventil ist von t0 bis t1 in geschlossenem Zustand, zum Zeitpunkt t1 bis t2 geöffnet und ab dem Zeitpunkt t2 wieder in geschlossenem Zustand. Dies wird durch Kurvenverlauf 10 dargestellt. Daneben ist in Fig. 10 das Volumen des Druckmediums in der Speicherkammer Vsp über der Zeit dargestellt. Zum Zeitpunkt t1 wenn beispielsweise das Auslaßventil 211 geöffnet wird erhöht sich das Volumen in der Speicherkammer 206 von Vsp1 auf Vsp2. Die Differenz Vsp2 - Vsp1 der Volumina dVsp ist proportional zur Abbauzeit TABBAU und entspricht dem geförderten Volumen aus einer Radbremse.. Die Abbauzeit des Volumens des Druckmediums in den Radbremsen TABBAU ist in Fig. 10 von t1 bis t3 dargestellt. Die Zeit t3 bis t4, die die Rückförderpumpe benötigt, um die Speicherkammer 206 zu leeren entspricht ungefähr dreimal der Zeitkonstante der Förderung durch die Rückförderpumpe TPFAB. Diese Zusammenhänge sind im Kurvenverlauf 11 in Fig. 10 dargestellt.

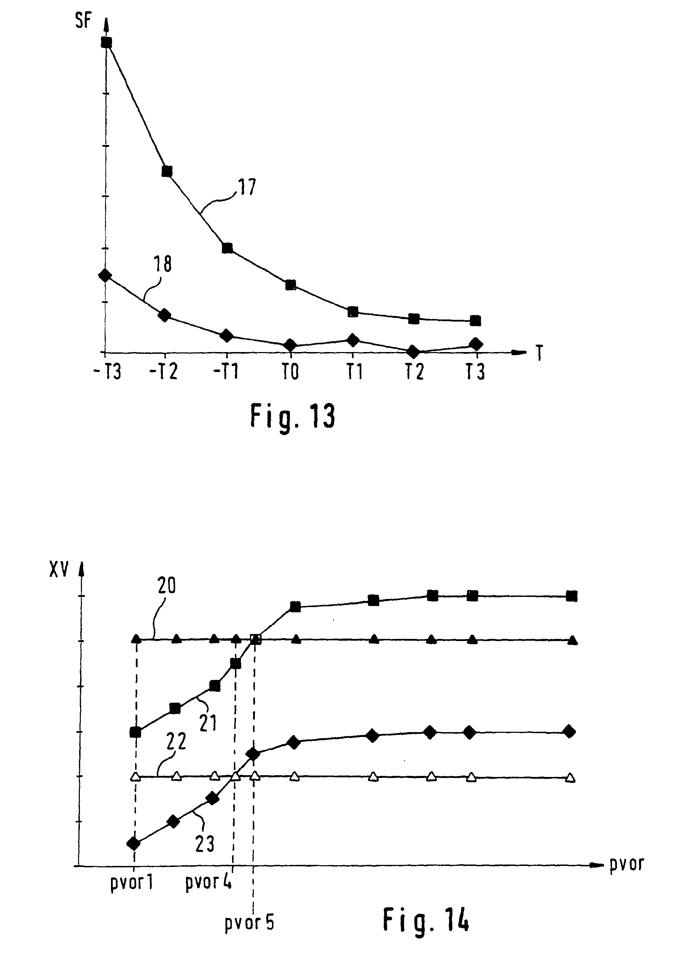

Das Volumenmodell kann für jedes Rad individuell verwendet werden. Vordere und hintere Räder werden mit unterschiedlichen Gewichtsfaktoren fkreisV für vordere Räder und fkreisH für hintere Räder bewertet. Da der Zusammenhang zwischen der Abbauzeit TABBAU und dem Volumen Vsp vom Druckniveau abhängig ist, wird ein exponentieller druckabhängiger Faktor fdruck im Volumenmodell eingeführt. Dieser Zusammenhang ist in Fig. 11 dargestellt. Dabei stellt Kurve 12 den Druckverlauf für die hinteren Räder über der Zeit dar und Kurve 13 den Druckverlauf für vordere Räder. Dabei bezieht sich der Druck $P\mu H$ auf einen hohen Reibkoeffizienten $\mu$ und der Druck $P\mu N$ auf einen niedrigen Reibkoeffizienten $\mu$. Der Zusammenhang zwischen der Abbauzeit TABBAU und dem Volumen Vsp abhängig vom Druckniveau wird dabei in Fig. 11 an Hand der Kurvensteigungen deutlich. Diese unterschiedliche Steigungen sind in den Steigungsdreiecken bei t02, t03, t04 und t05 dargestellt. Wobei die Steigungsdreiecke bei t02 und t03 einem hohen Reibkoeffizienten $\mu$ entsprechen, entsprechend $P\mu H$ und die Steigungsdreiecke bei t04 und t05 einem niedrigen Reibkoeffizienten $\mu$, entsprechend $P\mu N$ entsprechen. Durch die Wahl gleicher Zeitspannen $\Delta t$ der einen Seite der Steigungsdreiecke wird der Einfluß des Druckniveaus deutlich. Außerdem kann dieser Zusammenhang hinsichtlich der Viskosität der Bremsflüssigkeit auch temperaturabhängig sein. Dies wird später an Hand der Figuren 13 bis 15 näher erläutert. Das gesamte zu fördernde Volumen V kann dann beispielsweise durch Summenbildung in Element 99 von Fig. 9 ermittelt werden.

$$V = VVL + VVR + VHL + VHR \cdot mit$$
$$VVL = fabbzVL \cdot fkreisV \cdot fdruckVL$$
$$VVR = fabbzVR \cdot fkreisV \cdot fdruckVR \qquad \text{Gl(7v)}$$
$$VHL = fabbzHL \cdot fkreisH \cdot fdruckHL$$
$$VHR = fabbzHR \cdot fkreisH \cdot fdruckHR$$

Dabei bedeuten die den einzelnen Größen fabbz, fkreis und fdruck zugeordneten Bezeichnungen V vorne, H hinten, L links und R rechts. VVL, VVR, VHL und VHR sind die an den einzelnen Radbremsen geförderten Volumina und ergeben in Summe das Gesamtvolumen V.

Wie in Fig. 12 dargestellt beinhaltet der Gesamtstrom des Pumpenmotors I nach dem Einschalten den Anlaufstrom IAnlauf und in Leerlaufstellung den Leerlaufstrom ILeer. Deshalb soll der Strom I nicht direkt für die Vordruckschätzung verwendet werden. Um den für die Förderung entsprechenden Stromanteil zu ermitteln, werden diese Anteile Ianlauf und Ileer vom gemessenen Strom IMeß abgezogen. In Fig. 12 ist der Strom über der Zeit aufgetragen. Dabei zeigt Kurve 14 den gemessenen Strom IMeß, Kurve 15 den Leerlaufstrom ILeer mit dem Anlaufstrom IAnlauf und Kurve 16 den verwendeten, der Förderung entsprechenden effektiven Stromanteil Ieff. Die Zeitpunkte tb1 bis tb9 stellen die j Zeitpunkte der Bewertung des Stromes dar. Bis zur ersten Bewertung des Stromes zum Zeitpunkt tb1 muß eine Schätzung des Vordruckes als Festwert angenommen werden. Über ein Verzögerungssystem erster Ordnung in Block 98 von Fig. 9 mit der Zeitkonstante TPFP wird die Anbremsdynamik des Fahrers nachgebildet. Der Anlaufstrom wird wiederum mit einem einfachen Ansatz nachgebildet. Diese Schätzung ist in Gleichung 9v angegeben.

$$IAnlauf = \begin{cases} IAnlauf + \dfrac{Iampl}{Tlang} & beim \cdot Anlaufen \\ q1 \cdot IAnlauf & beim \cdot Abklingen \end{cases} \qquad \text{Gl(9v)}$$

Wobei Iampl der Spitze des Anlaufstroms und Tlang einem Zeitschritt entspricht. Die Größe Q1 beim Abklingen wird durch eine Exponentialfunktion mit TPFI der Zeitkonstante des Abklingens und TA der Abtastzeit dargestellt.

$$q1 = \exp\left(-\frac{TA}{TPFI}\right) \qquad\qquad \text{Gl(10v)}$$

In den Figuren 13 bis 15 wird die schon vorher angesprochene Temperaturkompensation hinsichtlich der Viskosität der Bremsflüssigkeit dargestellt. Die Wahl des Mittelwertes des Proportionalfaktors XVMittel in der Lernphase basiert auf den Messungen beispielsweise in einem Temperaturbereich von möglicherweise 20 bis 35°C. Für Regeleingriffe, insbesondere Bremsungen in einem anderen Temperaturbereich bzw. anderen Temperaturbereichen muß XVMittel entsprechend so angepaßt werden, daß die Beeinflussung der Temperatur T auf die Schätzung kompensiert wird. Der Ausgangspunkt dazu ist in Fig. 13 die Temperaturabhängigkeit der Schätzgenauigkeit. Aufgetragen ist der Schätzfehler SF entsprechend der Differenz des geschätzten und gemessenen Vordruckes pvor geteilt durch den gemessenen Vordruck über der Temperatur T. Wobei Regeleingriffe, insbesondere Bremsungen mit unterschiedlichen Bremsdrücken getrennt in zwei Gruppen bewertet werden. So stellt Kurve 17 den Schätzfehler 1 in einem ersten Druckbereich, beispielsweise von 100 bis 200 bar und Kurve 18 einen Schätzfehler 2 in einem zweiten Druckbereich, beispielsweise von 25 bis 50 bar, dar. So ist bei tiefen Temperaturen und hohem Druck der Schätzfehler am größten. Zur Kompensation des Schätzfehlers können nun zwei Verfahren eingesetzt werden.

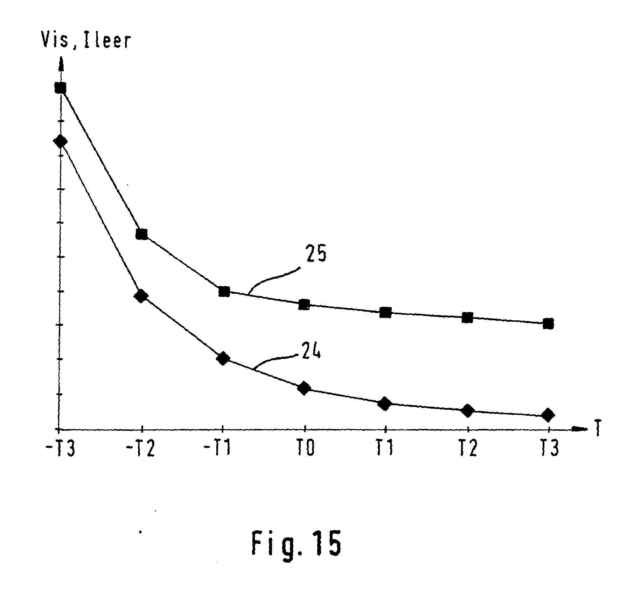

Das erste Verfahren wird an Hand Fig. 14 erläutert. Darin ist der Proportionalfaktor XV in Abhängigkeit vom Vordruck pvor und Temperatur T dargestellt. Im gleichen Abhängigkeitsverhältnis ist der Mittelwert XVMittel in gleicher Fig. 14 dargestellt. Zur Kompensation des Schätzfehlers, der durch die Temperatur hervorgerufen ist, muß der Mittelwert XVMittel temperaturabhängig gemacht werden. Die Darstellung in Fig. 13 zündet die Idee, daß sich der Proportionalfaktor XV tendentiell wie in Fig. 14 dargestellt nach der Temperatur T ändert. Dazu zeigt Kurvenverlauf 21 den Proportionalfaktor XV in einem ersten höheren Temperaturbereich (beispielsweise 20 bis 35°C) und Kurvenverlauf 23 den Proportionalfaktor XV in einem zweiten kälteren Temperaturbereich (beispielsweise von -20 bis 10°C). Die Kurvenverläufe 20 und 22 zeigen den Mittelwert des Proportionalfaktors dann jeweils bei hoher (wie vorher 20 bis 35°C) und bei niedriger (-20 bis 10°C) Temperatur. Dies bedeutet, daß der Mittelwert XVMittel in Abhängigkeit zur Temperatur entsprechend in Richtung des richtigen Wertes des Proportionalfaktors XV korrigiert werden kann. Beispielsweise wird vorab der Zusammenhang zwischen XVMittel und der Temperatur gelernt. Aus der Temperaturermittlung wird dann der passende XVMittel für die Druckschätzung verwendet. Die Korrektur des Mittelwertes XVMittel kann direkt über einen Temperatursensor, mit dem die Temperatur des Druckmediums ermittelt wird, durchgeführt werden. Falls ein Temperatursensor nicht zur Verfügung steht, kann die Temperatur des Druckmediums indirekt aus dem Strom des das Druckmedium fördernden Mittels ermittelt werden. Dabei kann man die Strommessung als Ersatz für einen Temperatursensor verwenden. Aus den Messungen der jeweiligen Regelung (ABS, ASR, FDR) mit der Vordruckschätzung für unterschiedliche Temperaturen, kann festgestellt werden, daß der stationäre Leerlaufstrom ILeer kontinuierlich mit zunehmender Temperatur abnimmt. Dies zündet die Idee, daß die Temperatur aus dem Strom ermittelt werden kann. Damit kann die Temperatur und die Schätzfehlerkompensation ohne weiteres durchgeführt werden, beispielsweise durch Kennlinienvorgabe bzw. eine Kennlinienschar oder ein Kennlinienfeld mit Temperatur und Strom als enthaltene Größen. Der Zusammenhang zwischen Leerlaufstrom und Temperatur ist in Fig. 15 in Kurvenverlauf 25 dargestellt. Die Temperaturabhängigkeit des Leerlaufstromes ILeer ist der der Viskosität Vis sehr ähnlich. Dies zeigt sich im Verlauf der Viskosität Vis, Kurve 24 in Fig. 15. Dies führt zur Idee, daß der Leerlaufstrom wesentlich von der Viskosität der Bremsflüssigkeit abhängt. Bei tieferen Temperaturen ist die Bremsflüssigkeit zähflüssiger, daher ist mehr Strom notwendig um dasselbe Volumen zu fördern. Darauf gründet sich die Idee, den aktuellen Leerlaufstrom, der z. B. durch Minimumbildung des gemessenen Stroms nach der Anlaufphase ermittelt wird, direkt zur Temperatur bzw. Schätzfehlerkompensation zu verwenden.

Bisher wurde der Leerlaufstrom einmal bei warmem Motor bestimmt und dann bei der Schätzung als Konstante eingesetzt. Zur Schätzfehlerkompensation wird der Leerlaufstrom ILeer während der Bremsung laufend ermittelt und bei der Vordruckschätzung als Variable verwendet. Im Gegensatz zu dem Ansatz über die Temperatur im Verfahren 1 ist hier der umgekehrte Weg beschritten. Die im Leerlaufstrom ILeer enthaltene Information über die Temperatur T wird auf diese Weise so berücksichtigt, daß der Proportionalfaktor XV über den gesamten Temperaturbereich denselben Wert behält. Die Folge ist, daß der schon optimierte Mittelwert des Proportionalfaktors XVMittel für den gesamten Temperaturbereich die Gültigkeit hat.

Formelzeichen

arad      Radbeschleunigung
ax        Fahrzeugverzögerung

| cp | Bremsmomentkoeffizient |
| Fkorr | Korrekturfaktor, umfaßt Luftwiderstand und Steigungswiderstand |
| g | Erdbeschleunigung |
| Jrad | Trägheitsmoment des Rades |
| kab | Abschwächungsfaktor (Druckminderer) |
| mF | Fahrzeuggewicht |
| prad | Raddruck |
| pVkenn | Ventilkennlinie |
| pvor | Vordruck |
| rrad | Radradius |
| tab | Zeitabstand zwischen ta und tb |
| tVent | Ventilansteuerzeit |
| tVent(k) | Ventilansteuerzeit zum k-ten Abtastzeitschritt |
| vrada | Radgeschwindigkeit zum Zeitpunkt a |
| vradb | Radgeschwindigkeit zum Zeitpunkt b |
| $\kappa$ | Schwerpunkthochlage |
| $\Psi$ | Hinterachslast |
| k | k-ter Abtastzeitschritt |
| fabbz | Volumenbilanz |

## Patentansprüche

1. Verfahren zur Schätzung einer den Vordruck repräsentierenden Druckgröße in einem Bremssystem (106), bei dem durch wenigstens eine Absperrvorrichtung für Einlass (209, 210) und/oder Auslass (211, 212) und/oder Durchlass (204, 205) eines Druckmediums Druckmedium von einem den Vordruck aufweisenden Reservoir (206) für das Druckmedium in eine Radbremse (107, 108, 109, 110) eingeleitet wird, wobei durch wenigstens ein das Druckmedium förderndes Mittel (203) Druckmedium von der Radbremse abgeleitet werden kann, mit folgenden Schritten:

   - Erfassen einer Betriebszustandsgröße für das das Druckmedium fördernde Mittel,
   - Schätzung des von dem das Druckmedium fördernden Mittel geförderten Volumens an Druckmedium,
   - Schätzung der den Vordruck repräsentierenden Druckgröße abhängig von wenigstens einer erfassten Betriebszustandsgröße und dem geschätzten geförderten Volumen an Druckmedium.

2. Verfahren nach Anspruch 1, **dadurch gekennzeichnet, dass** zur Ermittlung eines Radbremsdrucks in dem Bremssystem (106),

   - wenigstens ein weiterer Betriebszustand wenigstens einer Absperrvorrichtung für Einlass und/oder Auslass und/oder Durchlass des Druckmediums erfasst wird und
   - der Radbremsdruck in Abhängigkeit von dem durch die Druckgröße abgeschätzten Vordruck und den erfassten Betriebszuständen ermittelt wird.

3. Verfahren nach Anspruch 2, **dadurch gekennzeichnet, dass** die Ermittlung des Radbremsdrucks iterativ mittels eines Modells geschieht.

4. Verfahren nach Anspruch 3, **dadurch gekennzeichnet, dass** die Schätzung des Vordrucks mittels eines Volumenmodells geschieht.

5. Verfahren nach Anspruch 2 oder 3, **dadurch gekennzeichnet, dass** der Vordruck abhängig von einer als Maß für eine Drehzahl eines das Druckmedium fördernden Mittels verwendeten Größe, insbesondere einer Stromaufnahme eines Pumpenmotors, geschätzt wird.

6. Verfahren nach Anspruch 5, **dadurch gekennzeichnet, dass** die als Maß für die Drehzahl verwendete Größe einer Energieaufnahme, insbesondere einer Stromaufnahme, des das Druckmedium fördernden Mittels entspricht.

7. Verfahren nach Anspruch 1, **dadurch gekennzeichnet, dass** eine Plausibilitätsprüfung der ermittelten Druckgröße durchführbar ist.

8. Verfahren nach Anspruch 4, **dadurch gekennzeichnet, dass** in dem Modell und/oder dem Volumenmodell eine Temperaturinformation in einen Proportionalfaktor zur Bestimmung der Druckgröße oder in einen entsprechenden Mittelwert von Proportionalfaktoren eingebracht wird.

9. Verfahren nach Anspruch 4, **dadurch gekennzeichnet, dass** in dem Modell und/oder dem Volumenmodell eine Temperaturabhängigkeit eines Stromes und eine Temperaturabhängigkeit einer Viskosität des Druckmediums verglichen wird.

10. Verfahren nach Anspruch 4, **dadurch gekennzeichnet, dass** in dem Modell und/oder dem Volumenmodell eine Schätzfehlerkompensation durch einmalige oder konstante oder kontinuierliche, variable Einbringung eines Stromes durchgeführt wird.

11. Verfahren nach Anspruch 1 oder 2, **dadurch gekennzeichnet, dass** in einem ersten Verfahrenszyklus zur Schätzung des Vordrucks ein Reibkoeffizient vorgegeben wird.

12. Verfahren nach Anspruch 2, **dadurch gekennzeichnet, dass** in einem ersten Verfahrenszyklus zur Schätzung des Radbremsdrucks ein ungenauer Wert des Radbremsdrucks als Richtwert vorgegeben und/oder ermittelt wird, woraus in einem folgenden Zyklus ein genauer Wert bestimmt wird.

13. Vorrichtung zur Schätzung einer den Vordruck repräsentierenden Druckgröße in einem Bremssystem, bei dem durch wenigstens eine Absperrvorrichtung für Einlass (209, 210) und/oder Auslass (211, 212) und/oder Durchlass (204, 205) eines Druckmediums Druckmedium von einem den Vordruck aufweisenden Reservoir (206) für das Druckmedium in eine Radbremse (107, 108, 109, 110) eingeleitet wird, wobei durch wenigstens ein das Druckmedium fördernden Mittels (203) Druckmedium von der Radbremse abgeleitet werden kann, wobei ein Mittel (204) vorgesehen ist, welches

- eine Betriebszustandsgröße für das das Druckmedium fördernde Mittel erfasst, und
- das von dem das Druckmedium fördernden Mittel geförderte Volumen an Druckmedium schätzt, und
- den Vordruck repräsentierenden Druckgröße abhängig von wenigstens einer erfassten Betriebszustandsgröße und dem geschätzten geförderten Volumen an Druckmedium.

14. Vorrichtung nach Anspruch 13, **dadurch gekennzeichnet, dass** zur Ermittlung eines Radbremsdrucks in einem Bremssystem (106) ein Steuergerät (204) vorgesehen ist, welches

- wenigstens einen weiteren Betriebszustand wenigstens einer Absperrvorrichtung für Einlass und/oder Auslass und/oder Durchlass des Druckmediums erfasst und
- den Radbremsdruck in Abhängigkeit von dem durch die Druckgröße abgeschätzten Vordruck und den erfassten Betriebszuständen ermittelt.

**Claims**

1. Method for estimating a pressure quantity representing the admission pressure in a brake system (106), in which pressure medium is introduced from a pressure medium reservoir (206) having the admission pressure into a wheel brake (107, 108, 109, 110) by means of at least one shut-off device for the inlet (209, 210) and/or outlet (211, 212) and/or passage (204, 205) of a pressure medium, whilst pressure medium can be discharged from the wheel brake by at least one means (203) conveying the pressure medium, the said method having the following steps:

- detection of an operating state variable for the means conveying the pressure medium,
- estimation of the volume of pressure medium conveyed by the means conveying the pressure medium,
- estimation of the pressure quantity representing the admission pressure as a function of at least one detected operating state variable and of the estimated conveyed volume of pressure medium.

2. Method according to Claim 1, **characterized in that**, to determine a wheel brake pressure in the brake system (106),

- at least one further operating state of at least one shut-off device for the inlet and/or outlet and/or passage of the pressure medium is detected, and
- the wheel brake pressure is determined as a function of the admission pressure estimated by the pressure

**EP 1 056 632 B1**

quantity and of the detected operating states.

3.  Method according to Claim 2, **characterized in that** the determination of the wheel brake pressure takes place iteratively by means of a model.

4.  Method according to Claim 3, **characterized in that** the estimation of the admission pressure takes place by means of a volume model.

5.  Method according to Claim 2 or 3, **characterized in that** the admission pressure is estimated as a function of a variable, in particular a current consumption of a pump motor, used as a measure of a rotational speed of a means conveying the pressure medium.

6.  Method according to Claim 5, **characterized in that** the variable used as a measure of the rotational speed corresponds to an energy consumption, in particular a current consumption, of the means conveying the pressure medium.

7.  Method according to Claim 1, **characterized in that** a plausibility check of the pressure quantity determined can be carried out.

8.  Method according to Claim 4, **characterized in that**, in the model and/or the volume model, temperature information is introduced into a proportional factor for determining the pressure quantity or into a corresponding average value of proportional factors.

9.  Method according to Claim 4, **characterized in that**, in the model and/or the volume model, a temperature dependence of a flow and a temperature dependence of a viscosity of the pressure medium are compared.

10. Method according to Claim 4, **characterized in that**, in the model and/or the volume model, forecast error compensation is carried out by means of a once-only or constant or continuous variable introduction of a flow.

11. Method according to Claim 1 or 2, **characterized in that**, in a first method cycle for estimating the admission pressure, a coefficient of friction is preset.

12. Method according to Claim 2, **characterized in that**, in a first method cycle for estimating the wheel brake pressure, an inexact value of the wheel brake pressure is preset and/or determined as an approximate value, from which an exact value is determined in a following cycle.

13. Device for estimating a pressure quantity representing the admission pressure in a brake system (106), in which pressure medium is introduced from a pressure medium reservoir (206) having the admission pressure into a wheel brake (107, 108, 109, 110) by means of at least one shut-off device for the inlet (209, 210) and/or outlet (211, 212) and/or passage (204, 205) of a pressure medium, whilst pressure medium can be discharged from the wheel brake by at least one means (203) conveying the pressure medium, a means (204) being provided which

    - detects an operating state variable for the means conveying the pressure medium, and
    - estimates the volume of pressure medium conveyed by the means conveying the pressure medium, and
    - estimates the pressure quantity representing the admission pressure as a function of at least one detected operating state variable and of the estimated conveyed volume of pressure medium.

14. Device according to Claim 13, **characterized in that**, to determine a wheel brake pressure in a brake system (106), a control device (204) is provided which

    - detects at least one further operating state of at least one shut-off device for the inlet and/or outlet and/or passage of the pressure medium,
    and
    - determines the wheel brake pressure as a function of the admission pressure estimated by the pressure quantity and of the detected operating states.

16

**Revendications**

1. Procédé d'évaluation d'une grandeur de pression représentant la pression d'alimentation dans un système de freinage (106), selon lequel on introduit par au moins un dispositif d'arrêt pour admission (209, 210) et/ou échappement (211, 212) et/ou passage (204, 205) d'un fluide de pression, un fluide de pression dans un frein de roue (107, 108, 109, 110) à partir d'un réservoir (206) de fluide de pression, présentant la pression d'alimentation, et le fluide de pression peut être dérivé du frein de roue à travers au moins un moyen (203) transportant le fluide de pression, avec les étapes suivantes :

   - saisie d'une grandeur d'état de fonctionnement pour le moyen transportant le fluide de pression,
   - évaluation du volume de fluide de pression transporté par le moyen transportant le fluide de pression, et
   - évaluation de la grandeur de pression représentant la pression d'alimentation en fonction d'au moins une grandeur d'état de fonctionnement saisie et du volume estimé de fluide de pression transporté.

2. Procédé selon la revendication 1,
   **caractérisé en ce que**
   pour déterminer une pression de frein de roue dans le système de frein (106),

   - au moins un autre état de fonctionnement d'au moins un dispositif d'arrêt pour admission et/ou échappement et/ou passage du fluide de pression est saisi, et
   - la pression du frein de roue est déterminée en fonction de la pression d'alimentation estimée d'après la grandeur de pression et des états de fonctionnement saisis.

3. Procédé selon la revendication 2,
   **caractérisé en ce que**
   la détermination de la pression du frein de roue s'effectue de façon itérative au moyen d'un modèle.

4. Procédé selon la revendication 3,
   **caractérisé en ce que**
   l'évaluation de la pression d'alimentation est effectuée au moyen d'un modèle de volume.

5. Procédé selon la revendication 2 ou 3,
   **caractérisé en ce que**
   la pression d'alimentation est évaluée en fonction d'une grandeur utilisée comme mesure d'un nombre de tours d'un moyen transportant le fluide de pression, en particulier d'une consommation de courant d'un moteur de pompe.

6. Procédé selon la revendication 5,
   **caractérisé en ce que**
   la grandeur utilisée comme mesure du nombre de tours correspond à une consommation d'énergie, en particulier d'une consommation de courant du moyen transportant le fluide de pression.

7. Procédé selon la revendication 1,
   **caractérisé en ce qu'**
   on effectue un contrôle de plausibilité de la grandeur de pression déterminée.

8. Procédé selon la revendication 4,
   **caractérisé en ce qu'**
   on introduit dans le modèle et/ou modèle de volume une information de température en un facteur proportionnel pour la détermination de la grandeur de pression ou en une moyenne correspondante de facteurs proportionnels.

9. Procédé selon la revendication 4,
   **caractérisé en ce que**
   dans le modèle et/ou modèle de volume, on compare un courant en fonction de la température et une viscosité du fluide de pression en fonction de la température.

10. Procédé selon la revendication 4,
    **caractérisé en ce qu'**
    on effectue une compensation des erreurs d'évaluation dans le modèle et/ou modèle de volume par introduction

17

unique, ou constante, ou variable continue d'un courant.

**11.** Procédé selon la revendication 1 ou 2,
**caractérisé en ce qu'**
un coefficient de friction est prédéterminé dans un premier cycle du procédé pour l'évaluation de la pression d'alimentation.

**12.** Procédé selon la revendication 2,
**caractérisé en ce que**
dans un premier cycle du procédé en tant que valeur indicative pour l'évaluation de la pression du frein de roue, on prédéfinit et/ou on détermine une valeur imprécise de la pression du frein de roue à partir de laquelle une valeur précise est déterminée dans un cycle suivant.

**13.** Dispositif d'évaluation d'une grandeur de pression représentant la pression d'alimentation dans un système de freinage, dans lequel on introduit à travers au moins un dispositif d'arrêt pour admission (209, 210) et/ou échappement (211, 212) et/ou passage (204, 205) d'un fluide de pression, un fluide de pression dans un frein de roue (107, 108, 109, 110) à partir d'un réservoir (206) de fluide de pression, présentant la pression d'alimentation, et a travers au moins un moyen (203) transportant le fluide de pression, le fluide de pression peut être dérivé du frein de roue,
**caractérisé par** un moyen (204) qui

- saisit une grandeur d'état de fonctionnement du moyen transportant le fluide de pression,
- évalue le volume de fluide de pression transporté par le moyen transportant le fluide de pression, et
- évalue la grandeur de pression représentant la pression d'alimentation en fonction d'au moins une grandeur d'état de fonctionnement saisie et du volume évalué de fluide de pression transporté.

**14.** Dispositif selon la revendication 13,
**caractérisé en ce que**
pour la détermination d'une pression de frein de roue dans un système de freinage (106) un appareil de commande (204) :

- saisit au moins un autre état de fonctionnement d'au moins un dispositif d'arrêt pour admission et/ou échappement et/ou passage du fluide de pression, et
- détermine la pression du frein de roue en fonction de la pression d'alimentation évaluée par la grandeur de pression et des états de fonctionnement saisis.

EP 1 056 632 B1

# Fig. 1

19

**Fig. 2**

START — 249

k = 0 — 250

im 1.Regelzykl ? — 251
n / y

Ende d.1.Regelzykl ? — 252
y / n

$\mu = 1,4 ; a_X = -1,4g$ — 253

Gl.(2): $a_X = \dfrac{Vrada - Vradb}{tab}$  Gl.(10): $\mu = -a_X/g$ — 254

Hochl. phase ? — 255
y / n

$arad_{max} = max(arad)_k$  $arad = arad_{max}$ — 256

prad nach Gl.(9) mit prad aus Gl.(7) als Richtwert — 257

prad aus Hydraulik-modell Gl.(1) — 258

k = k + 1 — 263

Vor-druckschätz-ung mittels Pumpen-motor ? — 259
y / n

pvor aus Gl.(12): pvor = fauf · prad 1,5 < fauf < 2,0 — 260

pvor - Schätzung — 261

Berechnung der Ansteuerzeit tVent — 262

— 264
n / y

END — 265

**Fig. 3**

START — 249

k = 0 — 250

263 — k = k + 1

300

Vordruck-schätzung mittels Pumpenmotor möglich?

y

n

Ansatz 1

$\mu = 1,4 \;\; ; \; a_X = -1,4\,g$ — 253

pvor - Schätzung — 261

prad aus Gl.(9) — 301

pvor aus Gl.(12)
pvor = fauf · prad
$1,5 < fauf < 2,0$

prad aus Hydraulik-modell Gl.(1) — 258

260

Berechnung der Ansteuerzeit tVent — 262

264

265

n

y

END

# Fig. 4

START — 249

k = 0 — 250

263 — k = k+1

300 — Vordruck-schätzung mittels Pumpenmotor möglich?   y

Ansatz 2

n

Ermittlung von $a_x$ aus Radsignalen — 400

pvor - Schätzung — 261

Ermittlung von pvor aus: pvor = faktor· $a_x$ — 401

prad aus Hydraulik-modell Gl.(1) — 258

prad aus Hydraulik-modell Gl.(1) — 258

258

Berechnung der Ansteuerzeit tVent — 262

264

265

n

END   y

Fig. 5

23

## Fig. 6

Anstiegbegrenzung

prad (high-Rad)

prad (low-Rad)

$t_a$    $t_b$    $t_{a1}$    t

## Fig. 7

$V_{rad}$

low-Rad

high-Rad

$t_a$    $t_b$    $t_{a1}$    $t_{b1}$    t

Fig. 8

**Fig. 9**

**Fig. 10**

Fig. 11

Fig. 12

Fig. 13

Fig. 14

Fig. 15